# EUROPEAN PATENT SPECIFICATION

(11) **EP 1 161 485 B1**
(45) Date of publication and mention of the grant of the patent: **09.04.2003**
(21) Application number: 99971435.5
(22) Date of filing: 29.10.1999
(51) Int. Cl.: C08J 7/12, C08G 63/91

(54) **POLYMERIC CONTAINERS FOR 1,1-DISUBSTITUTED ETHYLENE MONOMER COMPOSITIONS**
POLYMERE CONTAINER FÜR 1,1-DISUBSTITUIERTE ETHYLENE MONOMERZUSAMMENSETZUNGEN
CONTENANTS POLYMERES POUR COMPOSITIONS DE MONOMERES ETHYLENE 1,1-BISUBSTITUES

(30) Priority: 29.10.1998 US 106093 P; 05.08.1999 US 147259 P
(43) Date of publication of application: 12.12.2001
(73) Proprietor: Closure Medical Corporation, Raleigh, North Carolina 27616 (US)
(72) Inventor: D'ALESSIO, Keith, R., Cary, NC 27515 (US); RIVERA, Andres, Raleigh, NC 27616 (US); COTTER, William, M., Raleigh, NC 27614 (US); BADEJO, Ibraheem, Morrisville, NC 27560 (US)
(74) Representative: Guerre, Dominique
(86) International application number: US9925326
(87) International publication number: WO00026284

(56) References cited:
- EP-A- 0 295 076
- US-A- 3 523 628
- US-A- 5 214 102
- US-A- 5 741 545
- PATENT ABSTRACTS OF JAPAN vol. 010, no. 349 (M-538), 26 November 1986 (1986-11-26) & JP 61 149341 A (TOYO KOHAN CO LTD), 8 July 1986 (1986-07-08)

## Description

### BACKGROUND OF THE INVENTION

This invention relates to containers made of polymeric materials. In particular, this invention relates to containers that are highly resistant to attack, solvation, and/or permeation by 1,1-disubstituted ethylene monomer compositions.

Containers made of polymeric materials are well known in the art. For example, containers made of polyolefins, such as polyethylene (PE), polycarbonate (PC), polyethylene terephthalate (PET), polypropylene (PP), polystyrene, polyvinylchloride (PVC), and thermoplastic elastomer are widely used. Similarly, fluorocarbons, such as Halar® ethylene-chlorotrifluoroethylene copolymer (ECTFE) (Allied Chemical Corporation, Morristown, NJ), Tefzel® ethylene-tetrafluoroethylene (ETFE) (E.I. duPont de Nemours and Co. Wilmington, DE), tetrafluoroethylene (TFE), polytetrafluoroethylene (PTFE), polytetrafluoroethylene fluorinated ethylene propylene (PTFE-FEP), polytetrafluoroethylene perfluoroalkoxy (PTFE-PFA), and polyvinylidene fluoride (PVDF) are used as container materials. Further, engineered resins, such as polyamide (e.g. nylon), polyphenylene oxides, and polysulfone, are also used as container materials.

In choosing a suitable container for a particular application, its chemical and physical properties in relationship to the properties of its contents as well as its cost are among primary considerations. The polymeric material used to form the container must be essentially inert with respect to the composition to be contained during the period in which the composition is contained. That is, the polymeric material used to form the container must not substantially react with or catalyze reaction of the material contained in the container, preferably over at least an intended life (or shelf-life) of the material. The polymeric material must also provide adequate physical containment and protection during the period in which the composition is contained. For example, in biological research settings, containers are often selected for their ability to stably contain aqueous compositions intended for culturing of microorganisms. In chemical and industrial settings, containers that show high resistance to attack and/or degradation by chemicals, such as acids, bases, solvents, and organics, are widely used.

For example, U.S. Patents Nos. 5,691,016 and 5,770,135 to Hobbs et al. disclose containers that are resistant to permeation by hydrocarbon fuels, and methods for producing these containers. The patents disclose a process for producing fluorinated plastic containers with excellent resistance to permeation by hydrocarbon fuels. The process relies on blow molding of plastic containers in the presence of fluorine-containing gases. In the process, a parison is formed from a pre-heated thermoplastic material, expanded within a closed mold by means of an inflating gas, and subjected to multiple fluorination treatment steps to effect fluorination of the interior surface of the parison. The containers so made show resistance to permeation by hydrocarbon fuels, such as motor oil.

Furthermore, it was known to form containers from materials that provide barrier properties. Fluoropolymers are known for such use. For example, U.S. Patent No. 5,016,784 to Batson discloses an applicator syringe for containing and dispensing moisture-sensitive adhesive. The syringe comprises a generally sealed barrel containing a plunger having a non-stick polymeric seal and a hydrocarbon grease disposed between the seal and the adhesive contained in the barrel. The barrel is made of non-reactive fluoropolymer such as poly(monochlorotrifluoroethylene). The non-stick polymeric seal is also made of a fluoropolymer selected from polytetrafluoroethylene, polychlorotrifluoroethylene, fluorinated ethylene propylene polymers, and polyvinylidene fluoride. The moisture sensitive adhesive is generally described as a cyanoacrylate adhesive.

Similarly, U.S. Patents Nos. 5,855,977 and 5,827,587, both to Fukushi et al., disclose multilayer articles comprising a non-fluorinated layer and a fluorinated layer. In U.S. Patent No. 5,855,977, the multi-layer article comprises a non-fluorinated layer; a fluorinated layer including inter-polymerized monomeric units derived from hexafluoropropylene or tetrafluoroethylene, one or more non-fluorinated olefinically unsaturated monomers, and substantially no vinylidene fluoride; and an aliphatic di-or polyamine to increase adhesion between the two layers. In U.S. Patent No. 5,827,587, the multi-layer article includes a first layer and a second layer. The first layer is a fluoropolymer comprising interpolymerized units derived from vinylidene fluoride; the second layer is a hydrocarbon polymer comprising polyamide, polyimide, carboxyl anhydride, or imide functional polyolefin; and an aliphatic di- or polyamine to increase adhesion between the two layers. The articles of both patents are disclosed as useful for tubing and hoses suitable for use in motor vehicles, such as for fuel-tank hoses.

Adhesives can comprise either organic or inorganic compounds, or a combination of the two, and have broad utility in both industrial (including household) and medical applications. Because it is most economical for manufacturers to produce adhesives on a large scale, and for merchants to purchase adhesives in bulk quantities prior to sale to consumers, adhesives are often stored for extended periods of time between manufacture and use. Therefore, they must be stored in containers that are capable of maintaining them in a substantially unadulterated state for a reasonable amount of time in order to make their bulk manufacture and purchase economical. Reasonable storage times apply to containers holding large volumes (such as greater than one liter), which are typically purchased by industrial concerns, as well as those holding small volumes (such as one liter or less, even a few milliliters or less), which are typically purchased by medical and individual consumers.

In addition to the widespread use of adhesives in industrial applications, recently the medical profession (including veterinary medicine) has begun to use certain adhesives as replacements for, or adjuncts to, sutures and staples for closure of wounds, as biological sealants, and as wound coverings. Among the adhesives currently being used for medical purposes are adhesives formed from 1,1-disubstituted ethylene monomers, such as the α-cyanoacrylates. Typically, for medical purposes, an adhesive should have a shelf-life of at least one year; however, an increased shelf-life beyond this provides increased economic advantages to both the manufacturer and the consumer. As used herein, shelf-life refers to the amount of time the container and composition therein can be held at approximately room temperature (21-25°C) without degradation of the composition and/or container occurring to the extent that the composition and container cannot be used in the manner and for the purpose for which they were intended. Thus, while some degradation to either or both of the composition and container can occur, it must not be to such an extent that the composition and/or container is no longer useable. Shelf-life can thus be limited by physical or aesthetic changes to the containers or products contained therein, by chemical reactions occurring within the composition being stored, by chemical reactions between the container and-the composition being stored, by degradation of the container itself, and the like.

Because the α-cyanoacrylates have become the most widely used adhesives for medical applications, containers that can hold these adhesives for extended periods of time without loss of the expected qualities of the adhesive (adherence, cure time, biological safety, purity, etc.) are essential.

High-density polyethylene (HDPE) is the industry standard polymeric material for packaging and containing α-cyanoacrylate adhesive monomers. HDPE generally has a density of above about 0.94 g/cm³. HDPE is the primary choice for a container material in the industry because it provides adequate containment and shelf-life for many α-cyanoacrylate monomer compositions, including methyl-, ethyl-, and butyl-cyanoacrylate monomers. These lower alkyl chain length α-cyanoacrylate adhesive monomers can be stably contained in HDPE containers for over one year without significant degradation of the monomer composition or the container.

For example, U.S. Patent No. 4,685,591 to Schaefer et al. discloses a multilayer packaging tube suitable for holding products containing substantial fractions of cyanoacrylate-type components. The tube has a layer of high-density polyethylene positioned on the side of the tube that comes into contact with the cyanoacrylate. The high-density polyethylene preferably has a density of at least 0.950 g/cm³. A primer layer of polyethylene imine is located outside of the high density polyethylene layer and acts to block migration to the outside surface of any cyanoacrylate product that passes through the high density polyethylene.

U.S. Patents Nos. 4,777,085, 4,731,268, and 4,698,247 to Murray, Jr. et al. disclose a multiple layer packaging sheet material, and containers and packages made therefrom, that are suitable for holding products containing substantial fractions of cyanoacrylates. The multiple-layer packaging sheet material has a layer of high-density polyethylene that is in contact with the cyanoacrylate-containing product. The high-density polyethylene preferably has a density of at least 0.950 g/cm³. The multiple-layer packaging sheet material also has a primer layer made of a low permeability polymer such as polyethylene imine (PEI) that impedes the migration of the cyanoacrylate product through the material.

U.S. Patent No. 3,523,628 to Colvin et al. discloses a container to hold cyanoacrylate ester adhesives. The container has a body that is substantially impermeable to air and moisture to minimize deterioration of the contained adhesive, and has an opening formed of a thermoplastic resin characterized by a low surface free energy. The container body may be constructed of any air or vapor impermeable material, including metals, glass, or ceramics. Synthetic resins can be employed as the container material or as a coating on the internal surfaces of a container formed of some other material, provided the resin is selected to satisfy the critical requirements of the invention as regards air and vapor permeability and inertness with respect to initiation of polymerization of the cyanoacrylate monomers. Preferred thermoplastic resins are the halogenated hydrocarbon polymers, especially where the halogen is fluorine, such as polyhexafluoropropylene, polytetrafluoropropylene, polyvinyl fluoride, and polyvinylidene fluoride. Copolymers of ethylene with polymers of the type just named can also be used. The cyanoacrylates to be contained include alkyl cyanoacrylates with alkyl groups having from 1 to 16 carbon atoms. Lower alkyl groups, such as methyl, are preferred.

U.S. Patent No. 3,524,537 to Winter discloses a hermetically sealed package comprising a poly(monochlorotrifluoroethylene) container having therein a sterile 2-cyanoacrylic ester adhesive. The adhesive is selected from alkyl 2-cyanoacrylate and fluoroalkyl 2-cyanoacrylate. Similar to the packages of Colvin, these packages are made from pre-fluorinated materials, and particularly from fluoropolymers.

Some of the commercial α-cyanoacrylate adhesive products use containers that are fabricated from HDPE, and have dispenser tips fabricated from linear low density polyethylene (LLDPE) and caps fabricated from PP. However, the present inventors unexpectedly found that these containers, and particularly the dispenser tips, are subject to long-term failure when in contact with certain 1,1-disubstituted ethylene monomer compositions, particularly longer alkyl chain length α-cyanoacrylates or compositions containing small amounts of stabilizers, but much less subject to failure with other 1,1-disubstituted ethylene monomer compositions, including lower alkyl chain length α-cyanoacrylates or compositions containing larger amounts of stabilizers.

### SUMMARY OF THE INVENTION

The present invention provides containers (including storage vessels, dispensers, applicators, and the like) comprising modified polymeric materials that provide an extended shelf-life for 1,1-disubstituted ethylene monomers for both industrial and medical uses. As used herein, an "extended shelf-life" refers to a shelf-life of at least 12 months, preferably at least 18 months, more preferably at least 24 months, and even more preferably, at least 30 months. Containers of the present invention comprise a barrier layer that is highly resistant to the effects of permeation by liquids and gases (including vapors such as water vapor that acts as a polymerization initiator), as well as highly resistant to degradation by 1,1-disubstituted ethylene monomers. As used herein, degradation of the container includes, but is not limited to, chemical attack, swelling, cracking, etching, embrittlement, solvation, and the like. The containers further provide resistance to degradation of the 1,1-disubstituted ethylene monomers contained therein. As used herein, degradation of the composition includes, but is not limited to, premature polymerization (as reflected by viscosity changes) and undesirable changes in reactivity (including increases or decreases in cure time).

In embodiments, the present invention provides a container, preferably in combination with a 1,1-disubstituted ethylene monomer composition contained in said container, wherein the container has an interior and an exterior surface. At least the interior surface is functionalized, for example, with various functional groups so as to also provide a barrier layer to decrease permeation of components of the monomer composition, and provide an increased stabilizing effect to the monomer composition, thereby increasing the shelf-life of the container and composition.

In particular, in embodiments, the present invention provides a container, preferably in combination with a 1,1-disubstituted ethylene monomer composition contained in said container, wherein the container has an interior and an exterior surface, comprising a polymeric resin matrix including at least one post-halogenated polymeric material. This post-halogenated polymeric material provides a barrier layer to decrease permeation of components of the monomer composition, and provides an increased stabilizing effect to the monomer composition, thereby increasing the shelf-life of the container and composition.

### BRIEF DESCRIPTION OF THE DRAWINGS

Reference will be made to the following drawings, in which:
Fig. 1 is a graph of viscosity versus storage time (in days) for a cyanoacrylate composition; and
Fig. 2. is a graph of viscosity versus storage time (in days) for a cyanoacrylate composition.

### DETAILED DESCRIPTION OF PREFERRED EMBODIMENTS

Monomers of 1,1-disubstituted ethylene adhesives such as α-cyanoacrylates are highly reactive, polymerizing in the presence of minute quantities of initiators, even initiators such as water vapor present in air. Therefore, in order to provide a stable adhesive monomer composition in a container with an extended shelf-life, it is desirable and beneficial to provide a container that is impermeable, or at least less permeable, to water, including water vapor. Otherwise, as water vapor enters the container, it acts as a polymerization initiator for the monomer, resulting in unwanted, premature polymerization of the adhesive monomers within the container.

Furthermore, because α-cyanoacrylate monomers are of relatively low molecular weight, they generally exist in both a liquid phase and a vapor phase when contained in a fixed volume at approximately room temperature and under standard pressure. It has been found that these monomers show a high degree of transmission into and through polymeric materials commonly used in containers. When these α-cyanoacrylate monomers pass through the container walls and reach the exterior surface of the container, they can polymerize and/or crystallize, generally forming a white, powdery material on the exterior surface of the container. This polymerization and/or crystallization is often referred to as "blooming" and is an indicator of failure of the container material.

In addition, monomers that enter into the polymeric matrix of the container can polymerize within the matrix before reaching the other side of the matrix and cause the container to fail, such as through swelling, cracking, splitting, or otherwise weakening of the polymeric matrix. Furthermore, monomers can interact with the polymer matrix, similarly resulting in failure of the container material.

In attempts to improve the shelf-life of adhesives, and the containers used to hold the adhesives, the present inventors have observed that many containers comprising polymeric resin materials do not provide an acceptable shelf-life for certain 1,1-disubstituted ethylene monomer-based adhesives. For example, containers comprising LLDPE polymers show degradation, such as the swelling described above, after only approximately nine months of exposure to certain 1,1-disubstituted ethylene monomer compositions, such as those comprising 2-octyl cyanoacrylate. Degradation is also noted in containers after exposure to such compositions that include either no stabilizer, or only a small amount of stabilizer. Other polymeric materials commonly used in the industry to fabricate containers also have been found to be unsuitable for long-term containment of certain adhesive monomers. Furthermore, although containers comprising HDPE can contain some α-cyanoacrylate monomers for at least 17 months without becoming noticeably degraded, an increase in this time is desirable to increase the shelf-life, thus making the adhesive containers more economical to produce and sell. During attempts to develop a container comprising a polymeric resin material to hold 1,1-disubstituted ethylene monomer compositions for extended periods of time, the present inventors developed the combinations and methods disclosed herein.

In particular, the inventors discovered that providing a post-halogenated polymeric barrier layer on at least the monomer-contacting surfaces of the container provides an unexpectedly superior shelf-life, especially for 1,1-disubstituted ethylene monomers, including, but not limited to esters of cyanoacrylic acids such as higher alkyl chain length alkyl α-cyanoacrylate adhesive monomer compositions. Thus, the present invention provides a container that is essentially impermeable, or at least less permeable, to water vapor and to low molecular weight monomers, including 1,1-disubstituted ethylene monomers such as α-cyanoacrylate monomers, and is economical to manufacture, to hold these adhesives. In addition, in embodiments where the adhesive is to be used for medical purposes, the container is compatible with at least one form of sterilization.

As used herein, the terms "post-fluorinated polymer" or more generally "post-halogenated polymer" refer to any polymer, at least a surface of which is halogenated, such as fluorinated, subsequent to formation of the polymer material. Thus, for example, the terms refer to polymeric materials wherein at least a surface of the polymer material is subsequently halogenated by suitable treatment methods to introduce halogen species into at least the surface layer of the polymeric material. Any of the halogens may be used, including fluorine, chlorine, bromine, iodine, and astatine. The terms thus generally exclude materials generally referred to as fluorocarbon polymers (or similar halocarbon polymers), where the polymer is initially formed from halogen-containing monomeric units, without any subsequent halogenation process being applied to a body of the polymerized material.

As used herein, "higher alkyl chain length" α-cyanoacrylate monomers includes α-cyanoacrylate monomers with alkyl chains of at least six carbons, e.g., those having 6, 7, 8, 9, 10, 11, 12, 13, 14, 15, or more carbons in the alkyl chain. As used herein, "lower alkyl chain length" α-cyanoacrylate monomers includes α-cyanoacrylate monomers with alkyl chains of five or fewer carbons, i.e. those having 1, 2, 3, 4, or 5 carbons in the alkyl chain.

The inventors further discovered that providing a functionalized surface barrier layer on at least the monomer-contacting surfaces of the container, i.e., by functionalizing the container layer that contacts the monomer, also provides an unexpectedly superior shelf-life, especially for 1,1-disubstituted ethylene monomers, including, but not limited to esters of cyanoacrylic acids such as alkyl α-cyanoacrylate adhesive monomer compositions. Thus, the present invention provides a container that is essentially impermeable, or at least less permeable, to water vapor and to low molecular weight monomers, including 1,1-disubstituted ethylene monomers such as α-cyanoacrylate monomers, and is economical to manufacture, to hold these adhesives. In addition, in embodiments where the adhesive is to be used for medical purposes, the container is compatible with at least one form of sterilization. Such functionalization of the container to form a barrier layer can be conducted in addition to, or in place of, the post-halogenation described above.

The present inventors further found that the relative shelf-lives of containers holding adhesive compositions may be related to the relative presence (or absence) of stabilizers in the adhesive compositions. In particular, it is generally known that lower chain length monomeric species, such as the lower alkyl chain length α-cyanoacrylate monomers, are more unstable than higher chain length monomeric species, such as the higher alkyl chain length α-cyanoacrylate monomers. Thus, a practice in the art has been to add a larger amount of one or more stabilizers to the monomer composition when lower alkyl chain length α-cyanoacrylate monomers are used, to prevent premature polymerization of the monomer. In contrast, where higher alkyl chain length α-cyanoacrylate monomers have been used, the practice has been to add a lesser amount of stabilizer, because less stabilizer is needed due to the increased stability of the monomeric species. That is, it is common practice to add to an adhesive monomeric composition only as much stabilizer as is necessary to stabilizer the monomers to substantially or completely prevent premature polymerization. Although addition of larger amounts of stabilizer would be expected to provide a more stable product, it is preferred to only add as much stabilizer as is necessary to substantially or completely prevent premature polymerization. This is because larger amounts of stabilizer cause a slower reaction (polymerization) rate when delivered to the substrate to be bonded. Furthermore, some of the stabilizing agents typically used in monomeric compositions, such as hydroquinone, are preferably minimized due to the detrimental effect that they can have on tissue, or due to questions as to their toxicity. Such concerns are particularly relevant where the monomeric composition is used for medical purposes.

However, the present inventors have discovered that this increased stability of higher chain length monomeric species does not necessarily carry forward to increased shelf-life of containers holding the compositions. For example, the present inventors discovered, with respect to higher alkyl chain length α-cyanoacrylate adhesive monomer compositions and/or a composition having a lesser amount of stabilizer, that the compositions can cause effective failure of the container prior to even the above-described blooming problem. For example, it has been found, with respect to a container having an LLDPE applicator tip, that after a period of time in storage, such as about one year, the higher alkyl chain length α-cyanoacrylate adhesive monomer compositions can cause swelling of the applicator tip. This swelling of the applicator tip can cause a dispensing hole in the tip to become closed such that the contents of the bottle can not be extracted from the container. After longer storage time, this swelling of the applicator tip can even result in bursting of the bottle at the neck portion.

Thus, the inventors discovered that although the higher chain length monomeric species are themselves more stable, they continue to exhibit problems in terms of permeation into and through the container walls, causing the above-described failures of the container. The present inventors believe that the container failure problem is due at least in part to the inclusion of lesser amounts, or absence, of stabilizer in the monomer composition. In fact, this problem is in a sense counterintuitive, because it was generally believed that the increased stability of the monomer itself would provide increased shelf-life of the container and composition combination.

It is believed that the observed container failure is due to polymerization of the monomer within the polymer matrix. For example, it is believed that the swelling of the container results from an amount of the monomer permeating into the polymeric matrix, and then polymerizing within the matrix to cause the matrix to swell and eventually break. The relative rate of swelling may be related to the presence of varying amounts (or the absence thereof) of various acidic and/or free radical stabilizers in the monomer composition. It is believed that as the amount of stabilizers increases, the relative occurrence of the swelling failure decreases, because the stabilizer also permeates into the matrix and prevents polymerization of the monomer until it reaches the outside wall of the container. Because the monomer passes through the container matrix without polymerizing, the amount of degradation of the container by the monomer is reduced (e.g., by reducing the amount of swelling and cracking of the container as a result of polymerization of the monomer within the container matrix). However, permeation of the monomer through the polymeric matrix continues, as evidenced by the "blooming" present on the outer walls of the container.

It is also possible that large 1,1-disubstituted ethylene monomers, such as the longer alkyl chain length α-cyanoacrylate monomers, are more soluble in the polymer matrix of the container, allowing a higher concentration of these monomers to enter the matrix as compared to lower alkyl chain α-cyanoacrylate monomers. Once within the polymer matrix, these larger monomers can affect the structure of the container by, for example, polymerizing or swelling the matrix by adding volume to the matrix.

Further, it is envisioned that the size (i.e. effective diameter) and/or configuration of the monomers might have an effect on the shelf-life of the container. More particularly, lower alkyl chain length α-cyanoacrylate monomers might be able to traverse the polymeric matrix of the container more rapidly than larger 1,1-disubstituted ethylene monomers. Thus, the smaller molecules will not reside within the matrix as long as larger monomers, and a reduction in interactions between the monomer and other monomers, or the monomer and the matrix will be seen.

However, the above explanations of the container failure problem are provided only as possible explanations of the problem, and are not meant to be limiting on the claimed invention. Likewise, the present invention is not bound to any particular theory as to the problem or its solution.

The present invention provides containers that are more highly impermeable to 1,1-disubstituted ethylene monomers, to thereby provide an extended shelf-life to the container and the monomers contained therein. The present invention accomplishes these objects by providing a functionalized layer on at least a surface of the container that comes into contact with the monomer, e.g., the internal surface of the container. In embodiments, this functionalization is provided by halogenating the desired surface of the container, such as by fluorinating the surface. This halogenation treatment is believed to alter the surface layer of the container, by introducing halogen atoms into or onto the layer. In other embodiments, different functional groups, such as SO₃H, CO₂H, sulfonamides, and the like, are introduced into or onto the container surface.

The present invention provides a container that is highly impermeable to 1,1-disubstituted ethylene monomer liquids and gases (including vapors). That is, the barrier layer included in the containers according to the present invention provides a container that is less permeable as compared to containers not including the barrier layer. In embodiments, the container comprises a polymeric matrix that is selected in conjunction with the material to be contained such that the container is essentially impermeable, or at least much less permeable, to at least the 1,1-disubstituted ethylene monomer material contained. The container comprises any suitable post-halogenated polymeric material, including, but not limited to, polyolefins, fluorinated hydrocarbons (fluorocarbons), and engineered resins. The container can comprise homopolymers, copolymers, higher order polymers, or mixtures thereof, and can comprise one species of polymeric material or mixtures of multiple species of polymeric material.

In embodiments, the container comprises any suitable polymeric material, which can be any of post-halogenated, pre-halogenated or non-halogenated, which is subjected to a functionalization treatment that functionalizes at least a surface layer of the polymeric material. This functionalization provides extended shelf-life to the container and to an adhesive composition contained therein. It is believed that the extended shelf-life is due to a reduced or eliminated diffusion of adhesive monomer, and particularly monomer vapor, through the container due to stearic hindrance by the functionalized barrier layer.

The barrier layer of embodiments of the invention comprises at least one post-halogenated polymer that is substantially inert with respect to the 1,1-disubstituted ethylene monomer to be contained, and thereby provides the containers with liquid and vapor (gas) impermeability characteristics. Post-halogenated polymeric materials increase the liquid and vapor impermeability of the containers to the extent that 1,1-disubstituted ethylene monomer compositions can be contained for extended periods of time without significant degradation of the monomer or the container. The improvement in shelf-life for containers holding certain 1,1-disubstituted ethylene monomers, including, but not limited to higher alkyl chain length α-cyanoacrylate monomer compositions, or monomer compositions including no or only small amounts of stabilizers, has not been realized until now. This is, in part, due to the fact that lower alkyl chain length α-cyanoacrylate monomers, many including stabilizers, comprise the vast majority of 1,1-disubstituted ethylene monomer adhesive compositions being marketed, and do not seem to cause shelf-life problems for non-fluorinated polymeric containers of the same magnitude as other 1,1-disubstituted ethylene monomers.

The post-halogenated polymeric materials on monomer-contacting surfaces of the container improve the barrier properties of the container with respect not only to 1,1-disubstituted ethylene adhesive monomers contained within the container, but to liquids and vapors (gases) present outside of the container as well. Thus, in embodiments of the present invention, the container is preferably impermeable, or much less permeable, to both the material inside the container as well as materials outside the container. This increase in barrier properties extends the shelf-life of the container and adhesive. This increase in barrier properties is especially important in view of the newly discovered property of increased swelling of polymeric resin-containers holding higher alkyl chain length α-cyanoacrylate monomers (as compared to lower alkyl chain length α-cyanoacrylate monomers) or non-stabilized or minimally-stabilized α-cyanoacrylate monomer compositions.

The vapor permeability of a container is dependent, to a large extent, on the polymer used to manufacture the container and the components within the container. For example, the vapor permeability of a container comprising HDPE is generally lower than that of a container comprising LLDPE when an α-cyanoacrylate adhesive monomer is contained within the container. Similarly, the vapor permeability of a container comprising LLDPE is generally lower than that of a container comprising low density polyethylene (LDPE). However, the present inventors have discovered that even HDPE does not always provide sufficient monomer liquid and gas impermeability to enable an extended shelf-life for the adhesive product. Thus, the present containers comprising a post-halogenated barrier layer have been developed. The present containers have wide applicability and can be used to contain many different 1,1-disubstituted ethylene monomer compositions, including, but not limited to, 1,1-disubstituted ethylene monomer compositions that do not substantially comprise alkyl α-cyanoacrylate monomers having an alkyl chain of less than 6 carbons or compositions that do not include higher amounts of stabilizers.

The present invention permits a reduction in the vapor permeability of containers comprising a wide variety of polymeric materials, and is not limited to reduction in vapor permeability of containers comprising polymeric materials with initially high vapor permeabilities only. Thus, this aspect of the present invention is applicable to containers made of, for example, HDPE, LLDPE, LDPE, and other polymers.

In embodiments, the containers of the present invention comprise a post-halogenated polymer, such as a post-fluorinated polymer, on an internal surface of the container, on each surface that is to contact a liquid or vapor composition comprising a 1,1-disubstituted ethylene monomer, or even on all surfaces of the container.

Containers of the present invention provide extended shelf-lives for 1,1-disubstituted ethylene monomer compositions, such as α-cyanoacrylate monomer compositions comprising α-cyanoacrylate monomers with lower and/or higher alkyl chain lengths. The containers of the present invention also provide extended shelf-lives for such monomer compositions that include no stabilizers, or only a sufficient amount of stabilizer to prevent premature polymerization of the monomeric material inside the lumen of the container. The containers can contain these monomer compositions for extended periods of time without showing visual evidence of container failure, such as swelling, cracking, or blooming.

An indication of premature polymerization in 1,1-disubstituted ethylene monomer compositions, such as α-cyanoacrylate monomer compositions in particular, is an increase in viscosity of the composition over time. That is, as the composition polymerizes, the viscosity of the composition increases. If the viscosity becomes too high, i.e., too much premature polymerization has occurred, the composition becomes unsuitable for its intended use or becomes very difficult to apply. Thus, while some polymerization or thickening of the composition may occur, such as can be measured by changes in viscosity of the composition, such change is not so extensive as to destroy or significantly impair the usefulness of the composition. However, the present invention, by providing a barrier layer in the containers, decreases or prevents the premature polymerization of the composition, and thereby provides better control over the viscosity of the composition.

Suitable post-halogenated polymer materials for use in the present invention include any such polymeric materials, amenable to halogenation processing, that are suitable for fabrication of containers that are subsequently or concurrently halogenated by at least one known halogenation method. The halogenation process must not render the polymeric material unusable as a container material. Polymeric materials suitable for subsequent halogenation processing include, but are not limited to, polyolefins and engineered resins.

Suitable polyolefins include, but are not limited to, polyethylene (PE), such as high-density polyethylene (HDPE), medium-density polyethylene; low-density polyethylene (LDPE), cross-linked high-density polyethylene (XLPE), linear low-density polyethylene (LLDPE), ultra low-density polyethylene, and very low-density polyethylene; polycarbonate (PC); polypropylene (PP); polypropylene copolymer (PPCO); polyallomer (PA); polymethylpentene (PMP or TPX); polyketone (PK); polyethylene terephthalates (PET), including polyethylene terephthalate G copolymer (PETG) and oriented PET; polystyrene (PS); polyvinylchloride (PVC); naphthalate; polybutylene terephthalate; thermoplastic elastomer (TPE); mixtures thereof; and the like. Exemplary densities of the above polyethylenes are as follows: LDPE - 0.910-0.925 g/cm³; medium-density polyethylene - 0.926-0.940 g/cm³; HDPE - 0.941-0.965 g/cm³. Other densities can be determined by the ordinary artisan by referencing ASTM D 1248 (1989).

- Containers of the present invention can comprise engineered resins. Exemplary engineered resins include, but are not limited to, polyamide, such as nylon; polyphenylene oxides (PPO); polysulfone (PSF); mixtures thereof; and the like.

In embodiments, the containers of the present invention can comprise mixtures of the above polyolefins, and/or engineered resins, so long as the resultant mixture is amenable to halogenation treatment.

Preferred containers of the present invention comprise post-halogenated polyethylene. In embodiments, the preferred polymer comprises LDPE, LLDPE, HDPE, XLPE (cross-linked polyethylene) or PET, more preferably LDPE, LLDPE, HDPE, or PET, and most preferably, LLDPE, HDPE, or PET.

The container can be constructed in any shape and size. The dimensional characteristics are limited only by-the intended use and practicality considerations. In embodiments, the container can hold greater than 55 gallons (U.S.). In other embodiments, the container can hold up to approximately 55 gallons, preferably 55 gallons, one quart, or one liter. In embodiments, the container holds no more than one liter, preferably up to approximately 10 milliliters (ml.). In some preferred embodiments, the container can hold up to approximately 1.0 ml., 1.5 ml., or 2.0 ml. The minimum volume for the container is limited only by practical considerations.

The container of the present invention can be constructed as a single piece, or may comprise multiple elements, such as a bottle, a cap, and a dispensing element (e.g. controlled dropper, syringe, bulb, swab, and the like). In some embodiments, each element of the container comprises the same polymeric material. In other embodiments, each element comprises a different polymeric material. In yet other embodiments, multiple elements comprise one polymeric material while other elements comprise (an)other polymeric material(s). Each element of a multi-element container can, but does not necessarily, comprise a halogenated barrier layer comprising one or more post-halogenated polymers. In preferred embodiments, each element of the container that contacts the material to be contained, either in the liquid or vapor phase, comprises at least one surface that comprises a post-halogenated polymer.

In embodiments where the container comprises multiple elements, each element can, but does not need to, comprise a polymeric material. However, for each container, at least one element that contacts the contained material should be a post-halogenated polymeric material. For example, in addition to, or instead of, comprising a polymeric material, elements of the container may be composed of materials such as metal, glass, ceramics, and the like. Likewise, as long as at least one element is formed of the post-halogenated polymeric material, other elements of the container can be formed from non-post-halogenated polymers. In general, the only limitation on the materials used to fabricate the container and its elements is that the surface of the container material must be sufficiently compatible with the composition to be contained that undesirable effects on the composition and/or the container do not prevail during contact of the composition with the container or its elements. In preferred embodiments where the container material comprises a polymeric material, at least the inner surface comprises a post-halogenated polymer according to the invention.

The halogenated surface, or barrier layer, may be integral with the container matrix or may be present as a laminate layer on the container matrix. In embodiments where the halogenated surface or barrier layer is formed as a laminate of a post-halogenated polymer over another material, the other material can be any other material suitable for forming the container, but is preferably also a polymeric material. Where the other material is a polymeric material, it can be any suitable polymeric material, including any of the above-described polyolefins, halogenated hydrocarbons and/or engineered resins. The halogenated surface or barrier layer is then preferably formed by halogenating an un-halogenated polymeric material, as described below. In embodiments where the halogenated barrier layer is integral with the container matrix, the barrier layer may be formed during a halogenation process conducted upon a suitable polymeric material. Any of the various halogenation techniques known to the skilled artisan can be used. Included among these techniques are those disclosed in U.S. Patents Nos. 5,693,283, 5,691,016, and 5,770,135, the entire disclosures of which are hereby incorporated by reference in their entirety.

The halogenation treatment may provide halogenation of the polymer material substantially only on a surface of the polymer material. That is, the halogen atoms are deposited into the polymer matrix primarily at the surface, leaving at least a portion (i.e., an interior layer) of the thickness of the polymer matrix substantially unhalogenated. Thus, the treatment halogenates the polymer matrix such that a majority of the halogen atoms are located on the exposed surface of the polymer material, and fewer halogen atoms are present as the depth into the polymer matrix increases.

In embodiments, the method comprises manufacturing a polymeric container, halogenating, i.e., post-halogenating (such as fluorinating or chlorinating) the polymeric material on at least the internal surface of the container (either prior to, during, or after molding the polymeric material into the form of the container), dispensing a 1,1-disubstituted ethylene monomer composition into the container, and, optionally, sealing the container. During such a process, at least one surface of the container (or element thereof) is exposed to a fluorine-containing source, such as liquid, gas, or plasma. Briefly, during fluorination, the fluorine attacks accessible (surface) polymer molecules and replaces protons attached to the polymer backbone. When halogenation occurs during molding, it can be accomplished by using a suitable halogen source, such as a fluorine-containing gas or a chlorine-containing gas, to blow mold the container. Included among the blow molding techniques are injection blow molding and extrusion blow molding, among others. The 1,1-disubstituted ethylene composition is then dispensed into the formed container.

In embodiments, the method further comprises sterilizing the 1,1-disubstituted ethylene monomer composition, either prior to, or subsequent to, dispensing into the container.

Thus, the present invention provides a method of manufacturing a container that provides an extended shelf-life for 1,1-disubstituted ethylene monomer compositions, as well as a container holding a 1,1-disubstituted ethylene monomer composition. The container can contain the 1,1-disubstituted ethylene monomer composition for extended periods of time before visual indications of failure, such as swelling of the container, are detectable.

It is believed that the fluorination process chemically modifies the polymers present at least at the internal surface of the polymeric matrix to form a thin layer of fluorinated polymer on the surface of the matrix. This thin layer in turn provides a decreased surface energy and a resultant lesser wetting of the container surface by the monomer composition.

Although the above description focuses on fluorination of the polymeric materials, other halogenation methods, including bromination, iodination, astatination and preferably chlorination, can advantageously be used according to the claimed invention. Chlorination and other halogenation processes are also generally known in the art, and can readily be adapted to provide halogenated layers for containers according to the present invention. It is believed that the chlorinated layers also provide the desired barrier properties to reduce permeation of the monomer through the container, and also to reduce the permeation of materials, such as water vapor, into the container from the outside.

In embodiments of the present invention, the above-described post-halogenation treatment can be replaced and/or supplemented by a different functionalization treatment of the polymeric material forming the container. Such functionalization can introduce, for example, SO₃H groups, carboxylic acid (CO₂H) groups, CONR₂ groups (where the R groups can be the same or different), CO₂R groups, COX groups or SO₂X groups (where X is a halogen, particularly fluorine or chlorine), sulfonamide groups, and the like to the monomer-contacting surface of the container. The sulfonamide groups can also be unsubstituted (SO₂NH₂) or substituted (SO₂NR₂, where the R groups can include H and can be the same or different).

Introduction of SO₃H groups into the polymer material can be readily accomplished, for example, by contacting the desired container surface with oleum, i.e., fuming sulfuric acid -- a combination of SO₃ and H₂SO₄. The amount or degree of functionalization of the container surface can be controlled, for example, by altering the length of contact time and the concentration of oleum used. For example, as the contact time and/or the concentration increases, the degree of functionalization will likewise generally increase.

If desired, the container surface can be further modified to alter the functional group present on the polymer surface. For example, the SO₃H functional group can be readily converted to a SO₂X functional group, such as SO₂Cl or SO₂F, by further treatment with a suitable reagent such as phosphorus pentachloride or phosphorus pentafluoride. These functional groups can in turn be converted to other functional groups, such as sulfonamides (SO₂NH₂ or SO₂NR₂, where R is any suitable substituted or unsubstituted organic radical) by further treatment with a suitable reagent such as ammonium hydroxide.

In a similar manner, carboxylic acid functional groups can be readily introduced onto the polymeric material by, for example, oxidizing the polymer surface. For example, the polymer surface can be oxidized by contacting the surface with a mixture of CrO₃ and sulfuric acid. This results in the introduction of carboxylic acid functional groups onto the polymer surface. Again, as described above, the amount or degree of functionalization of the container surface can be controlled, for example, by altering the length of contact time and the concentration of reactants used.

Various means of functionalization of polymer surfaces are described in, for example, D.E. Bergbreiter et al., "Hyperbranched Poly(Acrylic Acid) Grafts as Substrates for Synthesis of Functionally Elaborated Surfaces," Polym. Prepr. (Amer. Chem. Soc., Div. Polym. Chem.), 40(1), pp. 395-96 (1999); D.E. Bergbreiter et al., "Annealing and Reorganization of Sulfonated Polyethylene Films to Produce Surface-Modified Films of Varying Hydrophilicity," JACS, 113, pp. 1447-48 (1991); J.C. Ericsson et al., "Characterization of KMnO₄/H₂SO₄-Oxidized Polyethylene Surfaces by Means of ESCA and ⁴⁵Ca²⁺ Adsorption," J. Colloid & Interface Sci., 100, pp. 381-92 (1984); D.E. Bergbreiter, "Polyethylene Surface Chemistry," Prog. Polym. Sci., 19, pp. 529-60 (1994); and D.A. Olsen et al., "Surface Modification of Polyethylene Surfaces," J. Polymer Sci., Part A-1, pp. 1913-32 (1969). The entire disclosure of these references are hereby incorporated herein by reference.

In embodiments where the container material is functionalized by a treatment other than the above-described halogenation, any suitable container material can be used. For example, the container can be formed from any of the above-described polymeric materials, including halogenated and/or non-halogenated polymers. Polyethylene-based polymers are particularly preferred, such as low density polyethylene (LDPE).

The method described above results in a container that provides an extended shelf-life for 1,1-disubstituted ethylene monomers. Thus, the present invention also provides a method of storing a 1,1-disubstituted monomer composition for extended periods of time without failure of the container or monomer composition. In embodiments, the period of time the container can contain the monomer composition is at least one year. Preferably, the length of time is at least 18 months, more preferably at least 24 months or 30 months.

An additional unexpected benefit provided by the present invention is the increased stability of 1,1-disubstituted ethylene monomer compositions contained within containers that have undergone the described post-halogenation or functionalization treatment. As discussed above, halogenation causes the replacement of polymer protons of the container with halogen atoms. In performing the halogenation process, an excess of halogen is introduced into the halogenation chamber in order to maximize the replacement. At the termination of the process, there remains excess halogen within the polymer matrix. Under the proper conditions, this excess halogen can combine with the displaced protons to form acid such as hydrofluoric or hydrochloric acid, which remains within the container matrix. In a like manner, various functionalization treatments, such as oxidation, can introduce acid functional groups into the polymer surface. These acid functional groups are then in a position to be in contact with monomer contained in the container.

It is believed that, after dispensing of the 1,1-disubstituted ethylene monomer composition into this acidified container, the acid provides two stabilizing effects. First, the acid slowly diffuses out of the polymer matrix and into the composition contained within the container. The acid acts as an acidic stabilizer for the composition (i.e., it inhibits premature polymerization of the 1,1-disubstituted ethylene monomer). Second, the acid within the polymeric resin matrix acts as a stabilizer to any monomeric species that permeate into the matrix. The acid thus stabilizes the monomeric species during their travel through the matrix and until they reach the outside of the container, resulting in a lesser swelling of the container matrix. Thus, in both ways, the acid results in an even greater extension of the shelf life than is provided by the fluorinated barrier alone.

Furthermore, the presence of the acid within the container provides the additional unexpected benefit of being able to reduce the amount of additional stabilizing agents that otherwise may need to be added to the monomeric composition. As discussed above, some stabilizing agents pose questions as to the detrimental effects that the agent has on tissue, and in some cases raise questions as to toxicity of the agents. In medical applications, it is particularly necessary to reduce any toxic or detrimental effects of the composition and any additional components contained therein. Thus, because the treatment provides increased stability to the monomeric composition, due to lower permeability of the container walls as well as due to the presence of acids, it is possible to decrease, or even eliminate, the amount of other stabilizers that are added to the composition.

Of course, it is known in the art of halogenation processing to conduct a purge operation following completion of the halogenation treatment. Such a purge operation is generally conducted to purge residual free reactive halogen-containing gas or other reactive-species from the reaction chamber. However, this purge operation generally does not remove free halogens, or halogen-containing acids, that have become embedded, captured and/or dissolved in the container walls. Thus, according to the present invention, even when such a purge operation is conducted, it is beneficial to retain the residual halogen species within the container so as to acidify the container and provide the above-described stabilization. Accordingly, any optional subsequent processing to remove such residual halogen species is preferably not conducted according to embodiments of the present invention.

It is believed that this formation of acid from residual halogen also further differentiates the post-halogenated polymeric materials of the present invention from traditional fluorocarbons or other halocarbons. That is, it is believed that traditional halocarbons do not contain residual halogens in any effective amount to form an acid that affects stabilization of a monomeric composition. In contrast, the post-halogenation of a polymeric material according to the present invention, particularly with an excess of the halogen species, results in the presence of residual halogen that can react to form an acid, as described above.

Advantages provided by the acidified containers are also seen when containers are designed for repeated use. Historically, it has been difficult to design containers for repeated dispensing of α-cyanoacrylate compositions due to the reactivity of the α-cyanoacrylate upon exposure to air. Typically, upon exposure to moisture in the air, the α-cyanoacrylate adhesive begins to polymerize. When α-cyanoacrylate monomer comes in contact with the threads of the bottle used to contain it, for example, the bottle tends to become permanently sealed upon replacement of the cap. However, it is believed that the containers of the present invention do not show this unwanted permanent sealing characteristic because the acid that is present in the container matrix, such as hydrofluoric acid or hydrochloric acid, slowly diffuses from the container and acts as an anionic inhibitor that inhibits polymerization of monomer present on the threads of the bottle/cap. It is also possible that the effect of polymerization inhibition is due to the increase in inertness of the post-fluorinated polymers toward the 1,1-disubstituted ethylene monomers.

In embodiments of the present invention, the container is made, fluorinated and/or functionalized, and filled with a 1,1-disubstituted ethylene monomer in a continuous process that can be fully automated. This fully automated process can be performed aseptically, allowing the manufacture of a sterile, sealed container of adhesive that can be used in both industrial and medical applications.

The monomer composition is preferably a monomeric (including prepolymeric) 1,1-disubstituted ethylene monomer adhesive composition. In embodiments, the monomer is an α-cyanoacrylate. Preferred monomer compositions of the present invention, and polymers formed therefrom, are useful as tissue adhesives, sealants for preventing bleeding or for covering open wounds, and in other absorbable and non-absorbable biomedical applications. They find uses in, for example, apposing surgically incised or traumatically lacerated tissues; retarding blood flow from wounds; drug delivery; dressing burns; dressing skin or other superficial or surface wounds (such as abrasions, chaffed or raw skin, and/or stomatitis); hernia repair; meniscus repair; and aiding repair and regrowth of living tissue. Other preferred monomer compositions of the present invention, and polymers formed therefrom, are useful in industrial and home applications, for example in bonding rubbers, plastics, wood, composites, fabrics, and other natural and synthetic materials.

Monomers that may be used in this invention are readily polymerizable, e.g. anionically polymerizable or free radical polymerizable, or polymerizable by zwitterions or ion pairs to form polymers. Such monomers include those that form polymers, that may, but do not need to, biodegrade. Such monomers, and compositions comprising such monomers, are disclosed in, for example, U.S. Patent No. 5,328,687 to Leung, et al., and co-pending U.S. Patent Application Serial No. 09/099,457, both of which are hereby incorporated in their entirety by reference.

Useful 1,1-disubstituted ethylene monomers include, but are not limited to, monomers of the formula:

(I) HRC=CXY

wherein X and Y are each strong electron withdrawing groups, and R is H, -CH=CH₂ or, provided that X and Y are both cyano groups, a C₁-C₄ alkyl group.

Examples of monomers within the scope of formula (I) include α-cyanoacrylates, vinylidene cyanides, C₁-C₄ alkyl homologues of vinylidene cyanides, dialkyl methylene malonates, acylacrylonitriles, vinyl sulfinates and vinyl sulfonates of the formula CH₂=CX'Y' wherein X' is -SO₂R' or -SO₃R' and Y' is -CN, -COOR', -COCH₃, -SO₂R' or -SO₃R', and R' is H or hydrocarbyl.

Preferred monomers of formula (I) for use in this invention are α-cyanoacrylates. These monomers are known in the art and have the formula 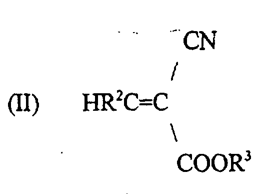 wherein R² is hydrogen and R³ is a hydrocarbyl or substituted hydrocarbyl group; a group having the formula -R⁴-O-R⁵O-R⁶, wherein R⁴ is a 1,2-alkylene group having 2-4 carbon atoms, R⁵ is an alkylene group having 2-4 carbon atoms, and R⁶ is an alkyl group having 1-6 carbon atoms; or a group having the formula 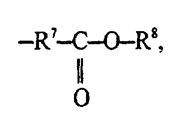 wherein R⁷ is 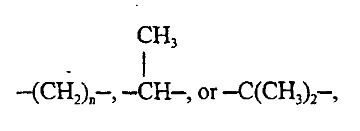 wherein n is 1-10, preferably 1-5 carbon atoms and R⁸ is an organic moiety.

Examples of suitable hydrocarbyl and substituted hydrocarbyl groups include straight chain or branched chain alkyl groups having 1-16 carbon atoms; straight chain or branched chain C₁-C₁₆ alkyl groups substituted with an acyloxy group, a haloalkyl group, an alkoxy group, a halogen atom, a cyano group, or a haloalkyl group; straight chain or branched chain alkenyl groups having 2 to 16 carbon atoms; straight chain or branched chain alkynyl groups having 2 to 12 carbon atoms; cycloalkyl groups; aralkyl groups; alkylaryl groups; and aryl groups.

The organic moiety R⁸ may be substituted or unsubstituted and may be straight chain, branched or cyclic, saturated, unsaturated or aromatic. Examples of such organic moieties include C₁-C₈ alkyl moieties, C₂-C₈ alkenyl moieties, C₂-C₈ alkynyl moieties, C₃-C₁₂ cycloaliphatic moieties, aryl moieties such as phenyl and substituted phenyl and aralkyl moieties such as benzyl, methylbenzyl and phenylethyl. Other organic moieties include substituted hydrocarbon moieties, such as halo (e.g., chloro-, fluoro- and bromo-substituted hydrocarbons) and oxy- (e.g., alkoxy substituted hydrocarbons) substituted hydrocarbon moieties. Preferred organic radicals are alkyl, alkenyl and alkynyl moieties.

In the cyanoacrylate monomer of formula (II), R³ is preferably an alkyl group having 1-16 carbon atoms or a group having the formula -AOR⁹, wherein A is a divalent straight or branched chain alkylene or oxyalkylene moiety having 1-8 carbon atoms, and R⁹ is a straight or branched alkyl moiety having 1-16 carbon atoms.

Examples of groups represented by the formula -AOR⁹ include 1-methoxy-2-propyl, 2-butoxy ethyl, isopropoxy ethyl, 2-methoxy ethyl, and 2-ethoxy ethyl.

Preferred α-cyanoacrylate monomers used in this invention include 2-octyl cyanoacrylate, dodecyl cyanoacrylate, 2-ethylhexyl cyanoacrylate, butyl cyanoacrylate, methyl cyanoacrylate, 3-methoxybutyl cyanoacrylate, 2-butoxyethyl cyanoacrylate, 2-isopropoxyethyl cyanoacrylate, or 1-methoxy-2-propyl cyanoacrylate.

The α-cyanoacrylates of formula (II) can be prepared according to methods known in the art. U.S. Patents Nos. 2,721,858 and 3,254,111, each of which is hereby incorporated in their entirety by reference herein, disclose methods for preparing α-cyanoacrylates. For example, the α-cyanoacrylates can be prepared by reacting an alkyl cyanoacetate with formaldehyde in a non-aqueous organic solvent and in the presence of a basic catalyst, followed by pyrolysis of the anhydrous intermediate polymer in the presence of a polymerization inhibitor. The α-cyanoacrylate monomers prepared with low moisture content and essentially free of impurities are preferred for biomedical use.

The α-cyanoacrylates of formula (II) wherein R³ is a group having the formula -R⁴-O-R⁵-G-R⁶ or the formula -R⁵-O-R⁶ can be prepared according to the method disclosed in U.S. Patent No. 4,364,876 to Kimura et al., which is hereby incorporated in its entirety by reference. In the Kimura et al. method, the α-cyanoacrylates are prepared by producing a cyanoacetate by esterifying cyanoacetic acid with an alcohol or by transesterifying an alkyl cyanoacetate and an alcohol; condensing the cyanoacetate and formaldehyde or para-formaldehyde in the presence of a catalyst at a molar ratio of 0.5-1.5:1, preferably 0.8-1.2:1, to obtain a condensate; depolymerizing the condensation reaction mixture either directly or after removal of the condensation catalyst to yield crude cyanoacrylate; and distilling the crude cyanoacrylate to form a high purity cyanoacrylate.

The α-cyanoacrylates of formula (II) wherein R³ is a group having the formula 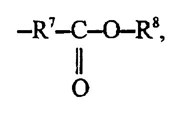 can be prepared according to the procedure described in U.S. Patent No. 3,995,641 to Kronenthal et al., which is hereby incorporated in its entirety by reference. In the Kronenthal et al. method, such α-cyanoacrylate monomers are prepared by reacting an alkyl ester of an α-cyanoacrylic acid with a cyclic 1,3-diene to form a Diels-Alder adduct which is then subjected to alkaline hydrolysis followed by acidification to form the corresponding α-cyanoacrylic acid adduct. The α-cyanoacrylic acid adduct is preferably esterified by an alkyl bromoacetate to yield the corresponding carbalkoxymethyl α-cyanoacrylate adduct. Alternatively, the α-cyanoacrylic acid adduct may be converted to the α-cyanoacrylyl halide adduct by reaction with thionyl chloride. The α-cyanoacrylyl halide adduct is then reacted with an alkyl hydroxyacetate or a methyl substituted alkyl hydroxyacetate to yield the corresponding carbalkoxymethyl α-cyanoacrylate adduct or carbalkoxy alkyl α-cyanoacrylate adduct, respectively. The cyclic 1,3-diene blocking group is finally removed and the carbalkoxy methyl α-cyanoacrylate adduct or the carbalkoxy alkyl α-cyanoacrylate adduct is converted into the corresponding carbalkoxy alkyl α-cyanoacrylate by heating the adduct in the presence of a slight deficit of maleic anhydride.

Examples of monomers of formula (II) include cyanopentadienoates and α-cyanoacrylates of the formula: 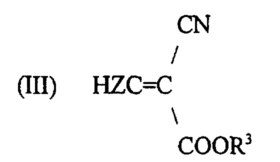 wherein Z is -CH=CH₂ and R³ is as defined above. The monomers of formula (III) wherein R³ is an alkyl group of 1-10 carbon atoms, i.e., the 2-cyanopenta-2,4-dienoic acid esters, can be prepared by reacting an appropriate 2-cyanoacetate with acrolein in the presence of a catalyst such as zinc chloride. This method of preparing 2-cyanopenta-2,4-dienoic acid esters is disclosed, for example, in U.S. Patent No. 3,554,990, which is hereby incorporated in its entirety by reference.

Especially useful α-cyanoacrylate adhesives compositions are those described in co-pending U.S. Patent Applications Serial Nos. 09/099,457 and 08/488,411, the disclosures of which are hereby incorporated by reference in their entireties.

The composition may optionally also include at least one plasticizing agent that imparts flexibility to the polymer formed from the monomer. The plasticizing agent preferably contains little or no moisture and should not significantly affect the stability or polymerization of the monomer. Such plasticizers are useful in polymerized compositions to be used for closure or covering of wounds, incisions, abrasions, sores or other applications where flexibility of the adhesive is desirable. Some thickeners can also impart flexibility to the polymer e.g., poly-2-ethylhexylcyanoacrylate.

Examples of suitable plasticizers include acetyl tributyl citrate, dimethyl sebacate, triethyl phosphate, tri(2-ethylhexyl)phosphate, tri(p-cresyl) phosphate, glyceryl triacetate, glyceryl tributyrate, diethyl sebacate, dioctyl adipate, isopropyl myristate, butyl stearate, lauric acid, trioctyl trimellitate, dioctyl glutarate, and mixtures thereof. Preferred plasticizers are tributyl citrate and acetyl tributyl citrate. In embodiments, suitable plasticizers include polymeric plasticizers, such as polyethylene glycol (PEG) esters and capped PEG esters or ethers, polyester glutarates and polyester adipates.

The addition of plasticizing agents in amounts ranging from about 0.5 wt.% to about 25 wt.%, or from about 1 wt.% to about 20 wt.%, or from about 3 wt.% to about 15 wt.% or from about 5 wt.% to about 7 wt.% provides increased elongation and toughness of the polymerized monomer over polymerized monomers not having plasticizing agents.

The composition may also optionally include at least one thixotropic agent. Suitable thixotropic agents are known to the skilled artisan and include, but are not limited to, silica gels such as those treated with a silyl isocyanate. Examples of suitable thixotropic agents are disclosed in, for example, U.S. Patent No. 4,720,513, the disclosure of which is hereby incorporated in its entirety.

The composition may also optionally include at least one natural or synthetic rubber to impart impact resistance, which is preferable especially for industrial compositions of the present invention. Suitable rubbers are known to the skilled artisan. Such rubbers include, but are not limited to, dienes, styrenes, acrylonitriles, and mixtures thereof. Examples of suitable rubbers are disclosed in, for example, U.S. Patents Nos. 4,313,865 and 4,560,723, the disclosures of which are hereby incorporated in their entireties.

The composition may also optionally include at least one stabilizing agent that inhibits polymerization. Such stabilizing agents may also include mixtures of anionic stabilizing agents and radical stabilizing agents. Any mixture of stabilizers is included as long as the mixture does not inhibit the desired polymerization of the monomer.

Examples of such suitable anionic stabilizing agents include, but are not limited to, sulfur dioxide, sulfuric acid, sulfonic acid, boron trifluoride, organic acids such as acetic acid, boron trifluoride, hydrogen fluoride, trifluoroacetic acid, picric acid, trichloroacetic acid, benzoic acid, and mixtures thereof. Preferably these anionic stabilizing agents are acidic stabilizing agents of organic acids such as acetic acid. In embodiments, the amount of acetic acid and/or benzoic acid is about 50-2000 ppm. Examples of suitable radical stabilizing agents include hydroquinone, hydroquinone monomethyl ether, catechol, pyrogallol, benzoquinone, 2-hydroxybenzoquinone, p-methoxy phenol, t-butyl catechol, butylated hydroxy anisole (BHA), butylated hydroxy toluene (BHT), t-butyl hydroquinone, and mixtures thereof. In embodiments, the amount of agents such as BHA is about 100-200,000 ppm, preferably 300-100,000 ppm, more preferably 500-20,000 ppm.

Suitable acidic stabilizing agents include those having aqueous pKₐ ionization constants ranging from -12 to 7, about -5 to about 7, preferably from about -3.5 to about 6. For example, suitable acidic stabilizing agents include: hydrogen sulfide (pKₐ 7.0), carbonic acid (pKₐ 6.4), triacetylmethane (pKₐ 5.9), acetic acid (pKₐ 4.8), benzoic acid (pKₐ 4.2), 2,4-dinitrophenol (pKₐ 4.0), formic acid (pKₐ 3.7), nitrous acid (pKₐ 3.3), hydrofluoric acid (pKₐ 3.2), chloroacetic acid (pKₐ 2.9), phosphoric acid (pKₐ 2.2), dichloroacetic acid (pKₐ 1.3), trichloroacetic acid (pKₐ 0.7), 2,4,6-trinitrophenol (picric acid) (pKₐ 0.3), trifluoroacetic acid (pKₐ 0.2), sulfuric acid (pKₐ -3.0), sulfurous acid, and mixtures thereof.

When adding the above-mentioned acidic stabilizing agents to the adhesive composition, the addition of plasticizing agents in amounts ranging from about 0.5 wt.% to about 16 wt.%, preferably from about 3 wt.% to about 9 wt.%, and more preferably from about 5 wt.% to about 7 wt.% provides increased elongation and toughness of the polymerized monomer over polymerized monomers not having plasticizing agents.

The concentration of the acidic stabilizing agents utilized may vary depending on the strength of the acid. For example, when using acetic acid, a concentration of 80-200 ppm (wt/wt), preferably 90-180 ppm (wt/wt), and more preferably 100-150 ppm (wt/wt) may be utilized. When using a stronger acid such as phosphoric acid, a concentration range of 20-80 ppm (wt/wt), preferably, 30-70 ppm (wt/wt) and more preferably 40-60 ppm (wt/wt) may be utilized. In embodiments, the amount of trifluoroacetic acid is about 100 to 3000 ppm, preferably 500-1500 ppm. In other embodiments, the amount of phosphoric acid is about 10-200 ppm, preferably about 50-150 ppm, and more preferably about 75-125 ppm.

Medical compositions of the present invention may also include at least one biocompatible agent effective to reduce active formaldehyde concentration levels produced during *in vivo* biodegradation of the polymer (also referred to herein as "formaldehyde concentration reducing agents"). Preferably, this component is a formaldehyde scavenger compound. Examples of formaldehyde scavenger compounds useful in this invention include sulfites; bisulfites; mixtures of sulfites and bisulfites; ammonium sulfite salts; amines; amides; imides; nitriles; carbamates; alcohols; mercaptans; proteins; mixtures of amines, amides, and proteins; active methylene compounds such as cyclic ketones and compounds having a b-dicarbonyl group; and heterocyclic ring compounds free of a carbonyl group and containing an NH group, with the ring made up of nitrogen or carbon atoms, the ring being unsaturated or, when fused to a phenyl group, being unsaturated or saturated, and the NH group being bonded to a carbon or a nitrogen atom, which atom is directly bonded by a double bond to another carbon or nitrogen atom.

Bisulfites and sulfites useful as the formaldehyde scavenger compound in this invention include alkali metal salts such as lithium, sodium, and potassium salts, and ammonium salts, for example, sodium bisulfite, potassium bisulfite, lithium bisulfite, ammonium bisulfite, sodium sulfite, potassium sulfite, lithium sulfite, ammonium sulfite, and the like.

Examples of amines useful in this invention include the aliphatic and aromatic amines such as, for example, aniline, benzidine, aminopyrimidine, toluene-diamine, triethylenediamine, diphenylamine, diaminodiphenylamine, hydrazines, and hydrazide.

Suitable proteins include collagen, gelatin, casein, soybean protein, vegetable protein, keratin, and glue. The preferred protein for use in this invention is casein.

Suitable amides for use in this invention include urea, cyanamide, acrylamide, benzamide, and acetamide. Urea is a preferred amide.

Suitable alcohols include phenols, 1,4-butanediol, d-sorbitol, and polyvinyl alcohol.

Examples of suitable compounds having a b-dicarbonyl group include malonic acid, acetylacetone, ethylacetone, acetate, malonamide, diethylmalonate, or another malonic ester.

Preferred cyclic ketones for use in this invention include cyclohexanone or cyclopentanone.

Examples of suitable heterocyclic compounds for use as the formaldehyde scavenger in this invention are disclosed, for example, in U.S. Patent No. 4,127,382 to Perry, which is hereby incorporated in its entirety by reference. Such heterocyclic compounds include, for example, benzimidazole, 5-methyl benzimidazole, 2-methylbenzimidazole, indole, pyrrole, 1,2,4-triazole, indoline, benzotriazole, indoline, and the like.

A preferred formaldehyde scavenger for use in this invention is sodium bisulfite.

In practicing the present invention, the formaldehyde concentration reducing agent is added in an effective amount to the cyanoacrylate. The "effective amount" is that amount sufficient to reduce the amount of formaldehyde generated during subsequent *in vivo* biodegradation of the polymerized cyanoacrylate. This amount will depend on the type of active formaldehyde concentration reducing agent, and can be readily determined without undue experimentation by those skilled in the art.

The formaldehyde concentration reducing agent may be used in this invention in either free form or in microencapsulated form. When microencapsulated, the formaldehyde concentration reducing agent is released from the microcapsule continuously over a period of time during the *in vivo* biodegradation of the cyanoacrylate polymer.

For purposes of this invention, the microencapsulated form of the formaldehyde concentration reducing agent is preferred because this embodiment prevents or substantially reduces polymerization of the cyanoacrylate monomer by the formaldehyde concentration reducing agent, which increases shelf-life and facilitates handling of the monomer composition during use.

Microencapsulation of the formaldehyde scavenger can be achieved by many known microencapsulation techniques. For example, microencapsulation can be carried out by dissolving a coating polymer in a volatile solvent, e.g., methylene chloride, to a polymer concentration of about 6% by weight; adding a formaldehyde scavenger compound in particulate form to the coating polymer/solvent solution under agitation to yield a scavenger concentration of 18% by weight; slowly adding a surfactant-containing mineral oil solution to the polymer solution under rapid agitation; allowing the volatile solvent to evaporate under agitation; removing the agitator; separating the solids from the mineral oil; and washing and drying the microparticles. The size of the microparticles will range from about 0.001 to about 1000 microns.

The coating polymer for microencapsulating the formaldehyde concentration reducing agent should be polymers which undergo *in vivo* bioerosion, preferably at rates similar to or greater than the cyanoacrylate polymer formed by the monomer, and should have low inherent moisture content. Such bioerosion can occur as a result of the physical or chemical breakdown of the encapsulating material, for example, by the encapsulating material passing from solid to solute in the presence of body fluids, or by biodegradation of the encapsulating material by agents present in the body.

Examples of coating materials that can be used to microencapsulate the formaldehyde concentration reducing agent include polyesters, such as polyglycolic acid, polylactic acid, poly-1,4-dioxa-2-one, polyoxalates, polycarbonates, copolymers of polyglycolic acid and polylactic acid, polycaprolactone, poly-b-hydroxybutyrate, copolymers of epsilon-caprolactone and delta-valerolactone, copolymers of epsilon-caprolactone and DL-dilactide, and polyester hydrogels; polyvinylpyrrolidone; polyamides; gelatin; albumin; proteins; collagen; poly(orthoesters); poly(anhydrides); poly(alkyl-2-cyanoacrylates); poly(dihydropyrans); poly(acetals); poly(phosphazenes); poly(urethanes); poly(dioxinones); cellulose; and starches.

Examples of surfactants that can be added to the mineral oil include those commercially available under the designations Triton X-100™ (Rohm and Haas) (octoxynol), Tween 20™ (ICI Americas) (polysorbate), and Tween 80™ (ICI Americas) (polysorbate).

The composition of this invention may further contain one or more adjuvant substances, such as thickening agents, medicaments, or the like, to improve the medical utility of the monomer for particular medical applications.

Suitable thickeners include, for example, polycyanoacrylates, polylactic acid, poly-1,4-dioxa-2-one, polyoxalates, polyglycolic acid, lactic-glycolic acid copolymers, polycaprolactone, lactic acid-caprolactonecopolymers, poly-3-hydroxybutyric acid, polyorthoesters, polyalkyl acrylates, copolymers of alkylacrylate and vinyl acetate, polyalkyl methacrylates, and copolymers of alkyl methacrylates and butadiene. Examples of alkyl methacrylates and acrylates are poly(2-ethylhexyl methacrylate) and poly(2-ethylhexyl acrylate), also poly(butylmethacrylate) and poly(butylacrylate), also copolymers of various acrylate and methacrylate monomers, such as poly(butylmethacrylate-*co*-methylacrylate).

To improve the cohesive strength of adhesives formed from the compositions of this invention, difunctional monomeric cross-linking agents may be added to the monomer compositions of this invention. Such crosslinking agents are known. U.S. Patent No. 3,940,362 to Overhults, which is hereby incorporated in its entirety by reference, discloses such cross-linking agents. Examples of suitable crosslinking agents include alkyl bis(2-cyanoacrylates), triallyl isocyanurates, alkylene diacrylates, alkylene dimethacrylates, trimethylol propane triacrylate, and alkyl bis(2-cyanoacrylates). A catalytic amount of an amine activated free radical initiator or rate modifier may be added to initiate polymerization or to modify the rate of polymerization of the cyanoacrylate monomer/crosslinking agent blend.

In embodiments, the adhesive compositions may additionally contain heat and/or light (e.g., visible or ultraviolet light) activated initiators and accelerators that initiate cross-linking of cyanoacrylate compositions containing compounds of formula (I).

Particular initiators for particular systems may be readily selected by one of ordinary skill in the art without undue experimentation. Suitable polymerization initiators for the cyanoacrylate compositions include, but are not limited to, detergent compositions; surfactants: e.g., nonionic surfactants such as polysorbate 20 (e.g., Tween 20™), polysorbate 80 (e.g., Tween 80™) and poloxamers, cationic surfactants such as tetrabutylammonium bromide, anionic surfactants such as benzalkonium chloride or its pure components, stannous octoate (tin (II) 2-ethylheaxanoate), and sodium tetradecyl sulfate, and amphoteric or zwitterionic surfactants such as dodecyldimethyl(3-sulfopropyl)ammonium hydroxide, inner salt; amines, imines and amides, such as imidazole, tryptamine, urea, arginine and povidine; phosphines, phosphites and phosphonium salts, such as triphenylphosphine and triethyl phosphite; alcohols such as ethylene glycol, methyl gallate, ascorbic acid, tannins and tannic acid; inorganic bases and salts, such as sodium bisulfite, magnesium hydroxide, calcium sulfate and sodium silicate; sulfur compounds such as thiourea and polysulfides; polymeric cyclic ethers such as monensin, nonactin, crown ethers, calixarenes and polymeric epoxides; cyclic and acyclic carbonates, such as diethyl carbonate; phase transfer catalysts such as Aliquat 336; and organometallics and manganese acetylacetonate and radical initiators. Cobalt naphthenate can be used as an accelerator for peroxide.

The compositions of this invention may further contain fibrous reinforcement and colorants such as dyes, pigments, and pigment dyes. Examples of suitable fibrous reinforcement include PGA microfibrils, collagen microfibrils, cellulosic microfibrils, and olefinic microfibrils. Examples of suitable colorants include 1-hydroxy-4-[4-methylphenyl-amino]-9,10 anthracenedione (D+C violet No. 2); disodium salt of 6-hydroxy-5-[(4-sulfophenyl)axo)-2-naphthalene-sulfonic acid (FD+C Yellow No. 6); 9-(o-carboxyphen0yl)-6-hydroxy-2,4,5,7-tetraiodo-3H-xanthen-3-one, disodium salt, monohydrate (FD+C Red No. 3); 2-(1,3-dihydro-3-oxo-5-sulfo-2H-indol-2-ylidene)-2,3-dihydro-3-oxo-1H-indole-5-sulfonic acid disodium salt (FD+C Blue No. 2); and [phthalocyaninato (2-)] copper.

Other compositions contemplated by the present invention are exemplified by U.S. Patents Nos. 5,624,669; 5,582,834; 5,575,997; 5,514,371; 5,514,372; and 5,259,835; and U.S. Patent Application Serial No. 08/714,288, the disclosures of all of which are hereby incorporated in their entirety by reference.

In embodiments, the container and its contents are sterilized. These embodiments include, but are not limited to, containers for use in medical applications. In embodiments where the container and its contents are to be sterilized, the container can be sterilized separately from the composition to be contained or the two can be sterilized together after the composition is placed in the container. It is preferable that the composition and container be sterilized together after the composition is dispensed into the container. Most preferably, the container holding the composition is sealed prior to sterilization.

Sterilization can be accomplished by any of the various techniques known to the skilled artisan, and is preferably accomplished by methods including, but not limited to, physical and irradiation methods. Whatever method is chosen, it must be compatible with the composition to be sterilized and the materials used to fabricate the container. Examples of physical methods include, but are not limited to, sterilization by heat. Examples of irradiation methods include, but are not limited to, gamma irradiation, electron beam irradiation, and microwave irradiation. A preferred method is gamma or microwave irradiation sterilization. Most preferred is electron beam irradiation sterilization. Suitable sterilization techniques are disclosed in co-pending U.S. Patent Application Serial No. 09/099,457, the entire disclosure of which is incorporated herein by reference.

According to the invention, it is possible to select suitable containers for the storage of 1,1-disubstituted ethylene monomer compositions that provide an increased shelf-life to the container/monomer product. Based on the above disclosure, suitable containers can be selected based on the relative required barrier properties for the monomer composition being contained. Thus, where the monomer composition exhibits a higher permeation into a polymer material used to form a container, the container polymer material can be selected so as to have a higher barrier property to the monomer composition.

As described above, the containers of the present invention also provide extended shelf-lives for such monomer compositions that include no stabilizers, or only a sufficient amount of stabilizer to prevent premature polymerization of the monomeric material inside the lumen of the container. The containers can contain these monomer compositions for extended periods of time without showing visual evidence of container failure, such as swelling, cracking, or blooming. Accordingly, a further benefit of the present invention is that monomer compositions can be provided that have a lesser amount of stabilizer than would otherwise be needed if stored in conventional containers, while having the same or equivalent degree of stabilization.

For example, as described above, acidic stabilizers are generally incorporated into a monomeric adhesive formulation in an amount of 10 to 300 ppm (wt/wt). However, in embodiments of the present invention, the amount of stabilizer added can be reduced or eliminated. Thus, for example, the amount of stabilizer can be reduced to an amount of about 90% or less, such as 80% or 70% or less, or 60% or 50% or less, or 40% or 30% or less, of the amount that would otherwise be needed if stored in conventional containers, while still having the same or equivalent degree of stabilization. In other embodiments, the amount of stablizer can be reduced to 20% or even 10% or less, of the amount that would otherwise be needed if stored in conventional containers, while still provided the same or equivalent degree of stabilization. In still other embodiments, it is possible to omit additional stabilizers altogether, whereby the stabilizing effect is provided entirely by the containers of the present invention.

Thus, based on the discoveries made by the present inventors, containers using polymer materials having higher barrier properties can be selected, for example, for higher alkyl chain length α-cyanoacrylate adhesive monomer compositions or for compositions having a lesser relative amount of stabilizer than is necessary for lower chain length α-cyanoacrylate adhesive monomer compositions or compositions having a higher relative amount of stabilizer. The polymer material of the container can thus be chosen based on other components of the monomer composition, such as the type or amount of acidic or radical stabilizer present. In contrast, however, polymer materials having lower barrier properties can be selected, for example, for lower alkyl chain length α-cyanoacrylate adhesive monomer compositions based on the length of the alkyl chain or based on the presence and quantity of other components of the composition, such as the presence of a higher amount of stabilizers. These lower barrier property polymer materials can be used, for example, because of the lesser effect on failure of the container, such as through cracking, swelling, and weakening of the container. Of course, where longer shelf-lives are desired even for these lower alkyl chain length α-cyanoacrylate adhesive monomer compositions, container polymer materials having higher barrier properties can be selected.

Although the invention has been described with respect to particular embodiments of the invention in terms of containers comprising preferred polymeric resin materials, the invention is not limited to such embodiments, and encompasses other polymeric materials that provide the properties described herein.

### EXAMPLES

### Assay 1: Assay for estimating rate of failure.

Because determining the failure rate of containers in the presence of α-cyanoacrylate adhesive monomers requires up to, or greater than, 9 months to perform when the containers are held at approximately room temperature, an assay is developed to simulate the effects of storage for extended periods of time on the containers. The assay that is developed includes exposing the containers or container parts to the α-cyanoacrylate monomer compositions at elevated temperatures. The elevated temperatures increase the rate of chemical interactions between the containers and the α-cyanoacrylate monomer compositions, providing data more rapidly than could be achieved at room temperature. This assay reliably simulates the effects of the α-cyanoacrylate monomer on the container at ambient temperatures for much longer periods of time, for example, approximately 9 months, or even a much longer period of contact between the container and the α-cyanoacrylate monomer.

The assay involves immersing a polymeric container material into a heated α-cyanoacrylate composition for a prescribed length of time. After this immersion, the polymeric material is removed and the amount of degradation is determined by measuring the increase in thickness (or other dimensional characteristic, such as diameter, etc.) of the polymeric material. An increase in thickness is a reliable indicator of the amount of permeation into the polymer matrix by the α-cyanoacrylate monomer and is correlated with failure of the container.

This assay is applicable to determination of the relative amount of time the container can be in contact with a given α-cyanoacrylate monomer before failure of the container, as well as the relative amount of time until catastrophic failure of the container. By failure of the container, it is meant that the container and a-cyanoacrylate composition held within fail to be useful for their intended purpose. Primarily, this type of failure is detectable by an inability to remove or dispense the α-cyanoacrylate composition from the container in the manner that was intended during manufacture. In other words, this type of failure is primarily detectable by a loss in function. By catastrophic failure of the container, it is meant that the container fails to provide containment of the composition. This type of failure includes splitting and cracking of the container. Primarily, this type of failure is detectable by visual inspection. One indication of this type of failure is a swelling of the container material.

### Example 1: Failure of LLDPE controlled dropper and HDPE bottle.

Containers comprising a bottle made from HDPE, a controlled dropper made from LLDPE, and a cap made from PP are filled with either 2-octyl cyanoacrylate or n-butyl cyanoacrylate and stored at approximately room temperature (21-25°C) for 15 months. The containers are then unsealed and tested for functionality of the container and adhesive composition. A total of between 10 and 18 containers from each of three separate container lots are tested.

On average, the containers holding 2-octyl cyanoacrylate monomers show an approximately 80% catastrophic failure rate at 15 months after filling of the container. The catastrophic failure is predominantly seen as swelling of the LLDPE dropper and splitting of the HDPE bottle at the bottle neck, ostensibly due to both weakening by the 2-octyl cyanoacrylate monomer and mechanical pressure from the swollen LLDPE dropper.

At 18 months after filling the containers, containers holding 2-octyl cyanoacrylate monomers show, on average, a catastrophic failure rate of greater than 90%.

In contrast, at 20 months post manufacture, containers holding n-butyl cyanoacrylate show a 0% failure rate.

One explanation for the difference in the failure rates for the containers can be the relative amount of stabilizers contained in the respective monomer compositions. In particular, the n-butyl cyanoacrylate monomer composition contains a greater amount of stabilizer than does the 2-octyl cyanoacrylate monomer composition. Thus, it is believed that the presence of the stabilizer in the 2-octyl cyanoacrylate monomer composition stabilizes the monomer during its permeation through the container wall until it reaches the outside of the container.

### Example 2: Effect of fluorinated barrier on failure rate.

The effect of a fluorinated polymer barrier layer on transmission of monomers into and through the polymeric matrix of containers is assayed using the containers described in Example 1 and the assay described in Assay 1.

HDPE and LLDPE polymeric containers are fluorinated by exposing the containers to a fluorine-containing gas in a sealed chamber. All gas wettable surfaces are contacted by the fluorine-containing gas. The fluorinated polymeric containers have a contact angle of less than 70.

The fluorinated polymeric materials are immersed in a 2-octyl cyanoacrylate monomer composition and transmission of monomer into the container matrix is determined by assaying swelling of the container (i.e., increase in container dimensions).

Polymeric container materials that have been fluorinated show at least 12 times, and up to 45 times, less swelling than non-fluorinated control containers under the assay conditions set forth above. Thus, containers of the present invention provide a greatly extended shelf-life for 1,1-disubstituted ethylene monomer compositions.

### Example 3

Several samples of low density polyethylene (LDPE) bottles are functionalized with oleum to provide improved storage stability to cyanoacrylate monomer compositions.

Four similar LDPE bottles are used. Each bottle is treated with oleum, 30% SO₃ in H₂SO₄, for various times to sulfonate the inside of the bottles. Treatment times for the respective bottles are 1.5 minutes, 2 minutes, 3 minutes and 15 minutes. After the respective treatment time, the oleum is withdrawn from the bottles and the bottles are washed one time with concentrated sulfuric acid. The bottles are next washed several times with distilled water, followed by two separate soakings in distilled water for three hours each.

It is determined that the longer the treatment time with oleum, the darker color the bottles become. This darkening of color indicates greater amounts of sulfonation of the interior surface of the LDPE bottles.

### Example 4

Several samples of low density polyethylene (LDPE) bottles are functionalized with oleum to provide improved storage stability to cyanoacrylate monomer compositions. The bottles are functionalized according to the procedure described in Example 3, except that contact times with the oleum are 1.5 minutes, 3.0 minutes and 5.0 minutes. To quantify the degree of functionalization, IC analysis is performed on extracts of the bottles. The results are as follows:

| Contact Time | Sulfate Content |
|---|---|
| 1.5 minutes | 1.5 ppm |
| 3.0 minutes | 3.9 ppm |
| 5.0 minutes | 38.2 ppm |

### Example 5

Two bottles are used to store a 2-octyl cyanoacrylate monomer composition for four months. Each bottle is made from LDPE. One bottle is untreated, while the other bottle is functionalized with oleum according to the procedure described in Example 3, for a contact time of 1.5 minutes. Comparison of the stored cyanoacrylate after four months shows that the composition in the oleum treated bottle is less viscous than the composition in the untreated bottle.

### Example 6

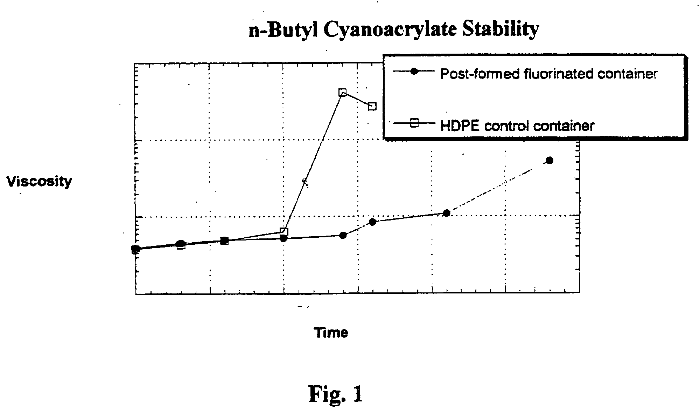

A formulation containing n-butyl cyanoacrylate and stabilizing agents is produced as a single lot of material. An amount of the formulation is placed into HDPE bottles and capped, as controls. A similar amount is placed into bottles that are identical to the controls, except that a post-forming fluorination process is employed in order to change the nature of the container surface. Specimens from both groups of bottles are subjected to thermal acceleration. Specimens from both groups are removed at various times and tested for viscosity. The results are graphed in Fig. 1 in order to determine the effect of the post-forming fluorination process upon the storage stability of the formulation.

### Example 7

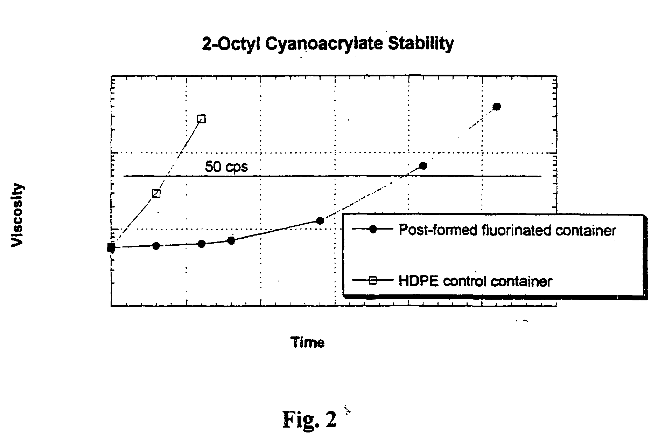

A formulation containing 2-octyl cyanoacrylate and stabilizing agents is produced as a single lot of material. An amount of the formulation is placed into HDPE bottles and capped, as controls. A similar amount is placed into bottles that are identical to the controls, except that a post-forming fluorination process is employed in order to change the nature of the container surface. Specimens from both groups of bottles are subjected to thermal acceleration. Specimens from both groups are removed at various times and tested for viscosity. The results are graphed in Fig. 2 in order to determine the effect of the post-forming fluorination process upon the storage stability of the formulation.

## Claims

1. A combination including:
a container comprising a polymeric resin matrix including at least one post-halogenated polymeric material, and
a 1,1-disubstituted ethylene monomer composition contained in said container.

2. The combination of claim 1, wherein said post-halogenated polymeric material is present on at least an interior surface of said container.

3. The combination of claim 1, wherein said post-halogenated polymeric material is in direct contact with said 1,1-disubstituted ethylene monomer composition.

4. The combination of claim 1, wherein said polymeric material is selected from the group consisting of a polyolefin and an engineered resin.

5. The combination of claim 4, wherein said polymeric material is high density polyethylene.

6. The combination of claim 4, wherein said polymeric material is linear low density polyethylene.

7. The combination of claim 6, wherein said polymeric material is polyethylene terephthalate.

8. The combination of claim 1, wherein said polymeric material comprises at least one polymer selected from the group consisting of low density polyethylene, linear low density polyethylene, high density polyethylene, cross-linked high density polyethylene, polypropylene, polyethylene terephthalate, polybutylene terephthalate, and oriented polyethylene terephthalate.

9. The combination of claim 1, wherein said polymeric material is polypropylene.

10. The combination of claim 1, wherein said container is a laminate and a layer comprising said post-halogenated polymeric material is in direct contact with said 1,1-disubstituted ethylene monomer composition.

11. The combination of claim 1, wherein said combination has a shelf-life of at least about twenty-four months.

12. The combination of claim 1, wherein said combination has a shelf-life of at least about thirty months.

13. The combination of claim 1, wherein said container is sterilized.

14. The combination of claim 1, wherein said 1,1-disubstituted ethylene monomer composition comprises an alkyl α-cyanoacrylate adhesive monomer having an alkyl carbon length of at least six carbons.

15. The combination of claim 14, wherein said alkyl α-cyanoacrylate adhesive monomer is 2-octyl cyanoacrylate.

16. The combination of claim 15, wherein said container comprises:
a body comprising an interior and an exterior surface, wherein said body comprises a post-halogenated high density polyethylene polymer on at least said interior surface,
a dispenser nozzle comprising at least an interior surface, wherein said dispenser nozzle comprises a post-halogenated linear low density polyethylene on said interior surface, and
a cap comprising post-halogenated polypropylene.

17. The combination of claim 1, wherein said post-halogenated polymeric material is a post-fluorinated polymeric material.

18. The combination of claim 1, wherein said post-halogenated polymeric material is a post-chlorinated polymeric material.

19. The combination of claim 1, wherein said post-halogenated polymeric material comprises a surface region and a sub-surface region, and wherein a halogen concentration in said surface region is greater than a halogen concentration in said sub-surface region.

20. The combination of claim 1, said polymeric resin matrix further comprising a halogen-containing acid.

21. The combination of claim 20, wherein said halogen-containing acid is hydrofluoric acid or hydrochloric acid.

22. A method of manufacturing a polymeric container containing a 1,1-disubstituted ethylene monomer, comprising;
providing a container comprising a polymeric material, said container comprising at least an internal surface and an external surface,
halogenating said polymeric material on at least said internal surface of said container,
dispensing a 1,1-disubstituted ethylene monomer composition into said container, and optionally sealing said container.

23. The method of claim 22, wherein said halogenating is performed after molding said polymeric material into a form that is to be the form of the container.

24. The method of claim 22, wherein said halogenating is performed concurrent with molding said polymeric material into a form that is to be the form of the container.

25. The method of claim 24, wherein said molding comprises blow-molding a parison using a halogen-containing gas, and said halogen-containing gas also performs said halogenating.

26. The method of claim 25, wherein residual halogen-containing species from said molding remain captured or dissolved in said container and are not removed from said container prior to said dispensing.

27. The method of claim 22, wherein said 1,1-disubstituted ethylene monomer is an alkyl α-cyanoacrylate.

28. The method of claim 27, wherein said alkyl α-cyanoacrylate has an alkyl chain length of at least 6 carbons.

29. The method of claim 28, wherein said alkyl α-cyanoacrylate has an alkyl chain length of 8-12 carbons.

30. The method of claim 29, wherein said alkyl chain length is 8 carbons.

31. The method of claim 22, further comprising sterilizing said 1,1-disubstituted ethylene monomer composition.

32. The method of claim 22, wherein said halogenating comprises fluorinating said polymeric material on at least said internal surface of said container.

33. The method of claim 22, wherein said halogenating comprises chlorinating said polymeric material on at least said internal surface of said container.

34. The method of claim 22, wherein said polymeric material is selected from the group consisting of low density polyethylene, linear low density polyethylene, high density polyethylene, cross-linked high density polyethylene, polypropylene, polyethylene terephthalate, polybutylene terephthalate, and oriented polyethylene terephthalate.

35. The method of claim 22, wherein residual halogen from said halogenating remains in said polymeric material.

36. The method of claim 35, wherein said residual halogen forms an acid.

37. The method of claim 36, wherein said residual acid is selected from the group consisting of hydrofluoric acid and hydrochloric acid.

38. A method of storing a 1,1-disubstituted ethylene monomer composition in a container comprising:
providing the combination of claim 1, and
storing said combination for more than one year without failure of the container or monomer composition.

39. The method of claim 38, wherein said storing of said monomer-containing container is for more than twenty-four months without failure of the container or monomer composition.

40. The method of claim 38, wherein said storing of said monomer-containing container is for more than thirty months without failure of the container or monomer composition.

41. The method of claim 38, wherein said 1,1-disubstituted ethylene monomer composition comprises an alkyl α-cyanoacrylate adhesive monomer having an alkyl carbon length of at least six carbons.

42. The method of claim 38, wherein said 1,1-disubstituted ethylene monomer composition comprises an alkyl α-cyanoacrylate adhesive monomer having an alkyl carbon length of from two to five carbons.

43. The method of claim 38, wherein said container is made by a process comprising:
providing a container comprising a polymeric material, said container comprising at least an internal surface and an external surface, and
halogenating said polymeric material on at least said internal surface of said container.

44. The method of claim 38, further comprising sealing said container between said dispensing step and said storing step.

45. The method of claim 44, further comprising sterilizing said container after said sealing step.

46. The method of claim 38, wherein said container is a container comprising a polymeric resin matrix including at least one post-halogenated polymeric material.

47. A combination including:
a container comprising a polymeric resin matrix including at least one functionalized polymeric material, and
a 1,1-disubstituted ethylene monomer composition contained in said container.

48. The combination according to claim 47, wherein said polymeric material is functionalized with at least one member selected from the group consisting of SO₃H, CO₂H, CONR₂, COX, CO₂R, SO₂X, SO₂NH₂, SO₂NR₂, and mixtures thereof, where R represents a substituted or unsubstituted organic radical and X represents a halogen.

49. The combination according to claim 47, wherein said polymeric material is functionalized with SO₃H groups.

50. The combination according to claim 47, wherein said polymeric material is functionalized with carboxylic acid groups.

51. The combination according to claim 47, wherein said polymeric material is functionalized with sulfonamide groups.

52. A method of manufacturing the combination of claim 47, comprising;
providing a container comprising a polymeric material, said container comprising at least an internal surface and an external surface,
functionalizing said polymeric material on at least said internal surface of said container,
dispensing a 1,1-disubstituted ethylene monomer composition into said container, and
optionally sealing said container.

53. The method according to claim 52, wherein said polymeric material is functionalized with at least one member selected from SO₃H, CO₂H, CONR₂, COX, CO₂R, SO₂X, SO₂NH₂, SO₂NR₂, and mixtures thereof, where R represents a substituted or unsubstituted organic radical and X represents a halogen.

54. The method according to claim 52, wherein said polymeric material is functionalized with SO₃H groups.

55. The method according to claim 52, wherein said polymeric material is functionalized with carboxylic acid groups.

56. The method according to claim 52, wherein said polymeric material is functionalized with sulfonamide groups.

## Patentansprüche

1. Eine Kombination, die Folgendes einschließt, nämlich
einen Behälter, der eine Polymerharzmatrix aufweist, die zumindest ein nachhalogeniertes Polymermaterial aufweist, und
eine 1,1-disubstituierte Ethylenmonomerzusammensetzung, die in dem Behälter enthalten ist.

2. Kombination nach Anspruch 1, bei der das nachhalogenierte Polymermaterial zumindest an einer inneren Fläche des Behälters vorhanden ist.

3. Kombination nach Anspruch 1, bei der das nachhalogenierte Polymermaterial in direktem Kontakt mit der 1,1-disubstituierten Ethylenmonomerzusammensetzung steht.

4. Kombination nach Anspruch 1, bei der das Polymermaterial ausgewählt ist aus der Gruppe bestehend aus einem Polyolefin und einem technischen Harz.

5. Kombination nach Anspruch 4, bei der das Polymermaterial Polyethylen mit hoher Dichte ist.

6. Kombination nach Anspruch 4, bei der das Polymermaterial ein lineares Polyethylen mit geringer Dichte ist.

7. Kombination nach Anspruch 6, bei der das Polymermaterial Polyethylenterephthalat ist.

8. Kombination nach Anspruch 1, bei der das Polymermaterial zumindest ein Polymer aufweist, ausgewählt aus der Gruppe bestehend aus Polyethylen mit geringer Dichte, linearem Polyethylen mit geringer Dichte, Polyethylen mit hoher Dichte, vernetztem Polyethylen mit hoher Dichte, Polypropylen, Polyethylenterephthalat, Polybutylenterephthalat und ausgerichtetem Polyethylenterephthalat.

9. Kombination nach Anspruch 1, bei der das Polymermaterial Polypropylen ist.

10. Kombination nach Anspruch 1, bei der der Behälter ein Laminat ist, und wobei eine Laminatschicht, die das nachhalogenierte Polymermaterial aufweist, in direktem Kontakt mit der 1,1-disubstituierten Ethylenmonomerzusammensetzung steht.

11. Kombination nach Anspruch 1, wonach diese Kombination eine Lagerstabilität von zumindest etwa vierundzwanzig Monaten aufweist.

12. Kombination nach Anspruch 1, wonach diese Kombination eine Lagerstabilität von zumindest etwa dreißig Monaten aufweist.

13. Kombination nach Anspruch 1, bei der der Behälter sterilisiert ist.

14. Kombination nach Anspruch 1, bei der die 1,1-disubstituierte Ethylenmonomerzusammensetzung ein Alkyl-α-cyanoacrylatklebemittelmonomer aufweist, das eine Alkylkettenlänge von zumindest sechs Kohlenstoffatomen aufweist.

15. Kombination nach Anspruch 14, bei der das Alkyl-α-cyanoacrylatklebemittelmonomer 2-octylcyanoacrylat ist.

16. Kombination nach Anspruch 15, bei der der Behälter Folgendes aufweist, nämlich
einen Körper, der eine innere und eine äußere Fläche aufweist, wobei der Körper zumindest ein nachhalogeniertes Polyethylenpolymer mit hoher Dichte auf zumindest der inneren Fläche aufweist,
eine Ausgabedüse, die zumindest eine innere Fläche aufweist, wobei die Ausgabedüse an der inneren Fläche ein nachhalogeniertes lineares Polyethylen geringer Dichte aufweist, und
eine Kappe, die nachhalogeniertes Polypropylen aufweist.

17. Kombination nach Anspruch 1, bei der das nachhalogenierte Polymermaterial ein nachfluoriertes Polymermaterial ist.

18. Kombination nach Anspruch 1, bei der das nachhalogenierte Polymermaterial ein nachchloriertes Polymermaterial ist.

19. Kombination nach Anspruch 1, bei der das nachhalogenierte Polymermaterial einen oberflächlichen Bereich und einen darunter liegenden Bereich aufweist, wobei die Halogenkonzentration in dem oberflächlichen Bereich größer ist als die Halogenkonzentration in dem darunter liegenden Bereich.

20. Kombination nach Anspruch 1, bei der die Polymerharzmatrix ferner eine Halogen enthaltende Säure aufweist.

21. Kombination nach Anspruch 20, bei der die Halogen enthaltende Säure Fluorwasserstoffsäure oder Chlorwasserstoffsäure ist.

22. Verfahren zum Herstellen eines Polymerbehälters, der ein 1,1-disubstituiertes Ethylenmonomer aufweist, mit den folgenden Schritten, nämlich
Bereitstellen eines Behälters, der ein Polymermaterial aufweist, wobei dieser Behälter zumindest eine innere und eine äußere Fläche aufweist,
Halogenieren des Polymermaterials auf zumindest der inneren Fläche des Behälters,
Einbringen einer 1,1-disubstituierten Ethylenmonomerzusammensetzung in den Behälter, und
gegebenenfalls Versiegeln des Behälters.

23. Verfahren nach Anspruch 22, bei dem die Halogenierung nach Formgeben des Polymermaterials in eine Form, die der Form des Behälters entspricht, durchgeführt wird.

24. Verfahren nach Anspruch 22, bei dem die Halogenierung gleichzeitig mit dem Formgeben des Polymaterials in eine Form, die der Form des Behälters entspricht, durchgeführt wird.

25. Verfahren nach Anspruch 24, bei dem die Formgebung ein Blasformen eines Rohlings unter Verwendung eines Halogen enthaltenden Gases aufweist, wobei das Halogen enthaltende Gas zugleich die Halogenierung durchführt.

26. Verfahren nach Anspruch 25, wonach Halogen enthaltende Rückstände aus der Formgebung im Behälter gefangen oder gelöst verbleiben und vor dem Einbringen nicht aus dem Behälter entfernt werden.

27. Verfahren nach Anspruch 22, bei dem das 1,1-disubstituierte Ethylenmonomer ein Alkyl-α-cyanoacrylat ist.

28. Verfahren nach Anspruch 27, bei dem das Alkyl-α-cyanoacrylat eine Alkylkettenlänge von zumindest sechs Kohlenstoffatomen aufweist.

29. Verfahren nach Anspruch 28, bei dem das Alkyl-α-cyanoacrylat eine Alkylkettenlänge von acht bis zwölf Kohlenstoffatomen aufweist.

30. Verfahren nach Anspruch 29, bei dem die Alkylkettenlänge acht Kohlenstoffatome beträgt.

31. Verfahren nach Anspruch 22, ferner den Schritt enthaltend, nämlich Sterilisieren der 1,1-disubstituierten Ethylenmonomerzusammensetzung.

32. Verfahren nach Anspruch 22, bei dem die Halogenierung ein Fluorieren des Polymermaterials auf zumindest der inneren Fläche des Behälters aufweist.

33. Verfahren nach Anspruch 22, bei dem die Halogenierung zumindest ein Chlorieren des Polymermaterials auf zumindest der inneren Fläche des Behälters aufweist.

34. Verfahren nach Anspruch 22, bei dem das Polymermaterial ausgewählt ist aus der Gruppe bestehend aus Polyethylen mit geringer Dichte, linearem Polyethylen mit geringer Dichte, Polyethylen mit hoher Dichte, vernetztem Polyethylen mit hoher Dichte, Polypropylen, Polyethylenterephthalat, Polybutylenterephthalat und ausgerichtetem Polyethylenterephthalat.

35. Verfahren nach Anspruch 22, bei dem rückständiges Halogen aus der Halogenierung in dem Polymermaterial verbleibt.

36. Verfahren nach Anspruch 35, bei dem das rückständige Halogen eine Säure bildet.

37. Verfahren nach Anspruch 36, bei dem die rückständige Säure ausgewählt ist aus der Gruppe bestehend aus Fluorwasserstoffsäure und Chlorwasserstoffsäure.

38. Verfahren zum Aufbewahren einer 1,1-disubstituierten Ethylenmonomerzusammensetzung in einem Behälter mit den folgenden Schritten, nämlich
Bereitstellen einer Kombination nach Anspruch 1, und
Aufbewahren der Kombination für mehr als ein Jahr ohne Fehler des Behälters oder der Monomerzusammensetzung

39. Verfahren nach Anspruch 38, bei dem das Aufbewahren des die Monomerzusammensetzung enthaltenden Behälters für mehr als vierundzwanzig Monate erfolgt, ohne Fehler des Behälters oder der Monomerzusammensetzung.

40. Verfahren nach Anspruch 38, bei dem das Aufbewahren des die Monomerzusammensetzung enthaltenden Behälters für mehr als dreißig Monate erfolgt, ohne Fehler des Behälters oder der Monomerzusammensetzung

41. Verfahren nach Anspruch 38, bei dem die 1,1-disubstituierte Ethylenmonomerzusammensetzung ein Alkyl-α-cyanoacrylatklebemittelmonomer aufweist, das eine Alkylkohlenstofflänge von zumindest sechs Kohlenstoffen aufweist.

42. Verfahren nach Anspruch 38, bei dem die 1,1-disubstituierte Ethylenmonomerzusammensetzung ein Alkyl-α-cyanoacrylatklebemittelmonomer aufweist, das eine Alkylkohlenstofflänge von zwei bis fünf Kohlenstoffatomen aufweist.

43. Verfahren nach Anspruch 38, bei dem der Behälter nach einem Verfahren hergestellt wird, das Folgendes aufweist, nämlich
Bereitstellen eines Behälters, der ein Polymermaterial aufweist, wobei der Behälter zumindest eine innere und eine äußere Fläche aufweist, und
Halogenieren des Polymermaterials auf zumindest der inneren Fläche des Behälters.

44. Verfahren nach Anspruch 38, ferner den Schritt enthaltend, nämlich Versiegeln des Behälters zwischen dem Einbringungsschritt und dem Aufbewahrungsschritt.

45. Verfahren nach Anspruch 44, bei dem ferner der Behälter nach dem Versiegelungsschritt sterilisiert wird.

46. Verfahren nach Anspruch 38, bei dem der Behälter ein Behälter ist, der eine Polymerharzmatrix aufweist, die zumindest ein nachhalogeniertes Polymermaterial aufweist.

47. Kombination, die Folgendes aufweist, nämlich
einen Behälter, der eine Polymerharzmatrix aufweist, die zumindest ein funktionalisiertes Polymermaterial aufweist, und
eine 1,1-disubstituierte Ethylenmonomerzusammensetzung, die in dem Behälter enthalten ist.

48. Kombination nach Anspruch 47, bei der das Polymermaterial durch eine Funktion ausgewählt aus der Gruppe bestehend aus SO₃H, CO₂H, CONR₂, COX, CO₂R, SO₂X, SO₂NH₂, SO₂NR₂ und Mischungen davon funktionalisiert ist, wobei R einen substituierten oder nicht substituierten organischen Rest und X ein Halogen darstellt.

49. Kombination nach Anspruch 47, bei der das Polymermaterial mit SO₃H-Gruppen funktionalisiert ist.

50. Kombination nach Anspruch 47, bei der das Polymermaterial mit Carboxylsäuregruppen funktionalisiert ist.

51. Kombination nach Anspruch 47, bei der das Polymermaterial mit Sulfonamidgruppen funktionalisiert ist.

52. Verfahren zum Herstellen einer Kombination nach Anspruch 47, das Folgendes aufweist, nämlich
Bereitstellen eines Behälters, der ein Polymermaterial aufweist, wobei der Behälter zumindest eine innere und eine äußere Fläche aufweist,
Funktionalisieren des Polymermaterials auf zumindest der inneren Fläche des Behälters,
Einbringen einer 1,1-disubstituierten Ethylenmonomerzusammensetzung in den Behälter, und
gegebenenfalls Versiegeln des Behälters.

53. Verfahren nach Anspruch 52, bei dem das Polymermaterial durch zumindest ein Mitglied ausgewählt aus der Gruppe bestehend aus SO₃H, CO₂H, CONR₂, COX, CO₂R, SO₂X, SO₂NH₂, SO₂NR₂ und Mischungen davon funktionalisiert ist, wobei R einen substituierten oder nicht substituierten organischen Rest und X ein Halogen darstellt.

54. Verfahren nach Anspruch 52, bei dem das Polymermaterial mit SO₃H-Gruppen funktionalisiert ist.

55. Verfahren nach Anspruch 52, bei dem das Polymermaterial mit Carboxylsäuregruppen funktionalisiert ist.

56. Verfahren nach Anspruch 52, bei dem das Polymermaterial mit Sulfonamidgruppen funktionalisiert ist.

## Revendications

1. Combinaison comprenant :
un récipient comprenant une matrice de résine polymère comprenant au moins un matériau polymère post-halogéné, et
une composition de monomère d'éthylène 1,1-disubstitué contenue dans ledit récipient.

2. Combinaison selon la revendication 1, dans laquelle ledit matériau polymère post-halogéné est présent sur au moins une surface intérieure dudit récipient.

3. Combinaison selon la revendication 1, dans laquelle ledit matériau polymère post-halogéné est en contact direct avec ladite composition de monomère d'éthylène 1,1-disubstitué.

4. Combinaison selon la revendication 1, dans laquelle ledit matériau polymère est choisi dans le groupe comprenant une polyoléfine et une résine technique.

5. Combinaison selon la revendication 4, dans laquelle ledit matériau polymère est le polyéthylène haute densité.

6. Combinaison selon la revendication 4, dans laquelle ledit matériau polymère est le polyéthylène linéaire basse densité.

7. Combinaison selon la revendication 6, dans laquelle ledit matériau polymère est le polyéthylène téréphtalate.

8. Combinaison selon la revendication 1, dans laquelle ledit matériau polymère comprend au moins un polymère choisi dans le groupe comprenant le polyéthylène basse densité, le polyéthylène linéaire basse densité, le polyéthylène haute densité, le polyéthylène réticulé haute densité, le polypropylène, le polyéthylène téréphtalate, le polybutène téréphtalate et le polyéthylène téréphtalate orienté.

9. Combinaison selon la revendication 1, dans laquelle ledit matériau polymère est le polypropylène.

10. Combinaison selon la revendication 1, dans laquelle ledit récipient est un stratifié et une couche comprenant ledit matériau polymère post-halogéné est un contact direct avec ladite composition de monomère d'éthylène 1,1-disubstitué.

11. Combinaison selon la revendication 1, dans laquelle ladite combinaison a une stabilité au stockage d'au moins vingt-quatre mois environ.

12. Combinaison selon la revendication 1, dans laquelle ladite combinaison a une stabilité au stockage d'au moins trente mois environ.

13. Combinaison selon la revendication 1, dans laquelle ledit récipient est stérilisé.

14. Combinaison selon la revendication 1, dans laquelle ladite composition de monomère d'éthylène 1,1-disubstitué comprend un monomère adhésif d'alkyl-α-cyanoacrylate ayant une longueur de chaîne alkyle-carbone d'au moins six atomes de carbone.

15. Combinaison selon la revendication 14, dans laquelle ledit monomère adhésif d'alkyl-α-cyanoacrylate est le 2-octyl-cyanoacrylate.

16. Combinaison selon la revendication 15, dans laquelle ledit récipient comprend :
un corps comprenant une surface intérieure et une surface extérieure, où ledit corps comprend un polymère de polyéthylène haute densité post-halogéné sur au moins ladite surface intérieure,
une tuyère distributrice comprenant au moins une surface intérieure, où ladite tuyère distributrice comprend un polyéthylène linéaire basse densité post-halogéné sur ladite surface intérieure, et
un capuchon comprenant un polypropylène post-halogéné.

17. Combinaison selon la revendication 1, dans laquelle ledit matériau polymère post-halogéné est un matériau polymère post-fluoré.

18. Combinaison selon la revendication 1, dans laquelle ledit matériau polymère post-halogéné est un matériau polymère post-chloré.

19. Combinaison selon la revendication 1, dans laquelle ledit matériau polymère post-halogéné comprend une région de surface et une région interne, et dans laquelle une concentration en halogène dans ladite région de surface est supérieure à une concentration en halogène dans ladite région interne.

20. Combinaison selon la revendication 1, dans laquelle ladite matrice de résine polymère comprend en outre un acide contenant un halogène.

21. Combinaison selon la revendication 20, dans laquelle ledit acide contenant un halogène est l'acide fluorhydrique ou l'acide chlorhydrique.

22. Procédé de fabrication d'un récipient polymère contenant un monomère d'éthylène 1,1-disubstitué, comprenant les étapes consistant à :
fournir un récipient comprenant un matériau polymère, ledit récipient comprenant au moins une surface interne et une surface externe,
halogéner ledit matériau polymère sur au moins ladite surface interne dudit récipient,
distribuer une composition de monomère d'éthylène 1,1-disubstitué dans ledit récipient, et
fermer facultativement ledit récipient de façon étanche.

23. Procédé selon la revendication 22, dans lequel ladite halogénation est réalisée après moulage dudit matériau polymère en une forme qui doit être la forme du récipient.

24. Procédé selon la revendication 22, dans lequel ladite halogénation est réalisée en même temps que le moulage dudit matériau polymère en une forme qui doit être la forme du récipient.

25. Procédé selon la revendication 24, dans lequel ledit moulage comprend le moulage par soufflage d'une paraison en utilisant un gaz contenant un halogène, et ledit gaz contenant un halogène réalise également ladite halogénation.

26. Procédé selon la revendication 25, dans lequel des espèces contenant un halogène résiduel issu dudit moulage restent piégées ou dissoutes dans ledit récipient et ne sont pas éliminées dudit récipient avant ladite distribution.

27. Procédé selon la revendication 22, dans lequel ledit monomère d'éthylène 1,1-disubstitué est un alkyl-α-cyanoacrylate.

28. Procédé selon la revendication 27, dans lequel ledit alkyl-α-cyanoacrylate a une longueur de chaîne alkyle d'au moins 6 atomes de carbone.

29. Procédé selon la revendication 28, dans lequel ledit alkyl-α-cyanoacrylate a une longueur de chaîne alkyle de 8 à 12 atomes de carbone.

30. Procédé selon la revendication 29, dans lequel ladite longueur de chaîne alkyle est de 8 atomes de carbone.

31. °Procédé selon la revendication 22, comprenant en outre la stérilisation de ladite composition de monomère d'éthylène 1,1-disubstitué.

32. Procédé selon la revendication 22, dans lequel ladite halogénation comprend la fluoration dudit matériau polymère sur au moins ladite surface interne dudit récipient.

33. Procédé selon la revendication 22, dans lequel ladite halogénation comprend la chloration dudit matériau polymère sur au moins ladite surface interne dudit récipient.

34. Procédé selon la revendication 22, dans lequel ledit matériau polymère est choisi dans le groupe comprenant le polyéthylène basse densité, le polyéthylène linéaire basse densité, le polyéthylène haute densité, le polyéthylène réticulé haute densité, le polypropylène, le polyéthylène téréphtalate, le polybutène téréphtalate et le polyéthylène téréphtalate orienté.

35. Procédé selon la revendication 22, dans lequel ledit halogène résiduel issu de ladite halogénation reste dans ledit matériau polymère.

36. Procédé selon la revendication 35, dans lequel ledit halogène résiduel forme un acide.

37. Procédé selon la revendication 36, dans lequel ledit acide résiduel est choisi dans le groupe comprenant l'acide fluorhydrique et l'acide chlorhydrique.

38. Procédé de stockage d'une composition de monomère d'éthylène 1,1-disubstitué dans un récipient comprenant les étapes consistant à :
fournir la combinaison de la revendication 1, et
stocker ladite combinaison pendant plus d'une année sans défaut du récipient ou de la composition de monomère.

39. Procédé selon la revendication 38, dans lequel ledit stockage dudit récipient contenant le monomère dure plus de vingt-quatre mois sans défaut du récipient ou de la composition de monomère.

40. Procédé selon la revendication 38, dans laquelle ledit stockage dudit récipient contenant le monomère dure plus de trente mois sans défaut du récipient ou de la composition de monomère.

41. Procédé selon la revendication 38, dans laquelle ladite composition de monomère d'éthylène 1,1-disubstitué comprend un monomère adhésif d'alkyl-α-cyanoacrylate ayant une longueur de chaîne alkyle-carbone d'au moins six atomes de carbone.

42. Procédé selon la revendication 38, dans lequel ladite composition de monomère d'éthylène 1,1-disubstitué comprend un monomère adhésif d'alkyl-α-cyanoacrylate ayant une longueur de chaîne alkyle-carbone de deux à cinq atomes de carbone.

43. Procédé selon la revendication 38, dans lequel ledit récipient est fabriqué selon un procédé comprenant les étapes consistant à :
fournir un récipient comprenant un matériau polymère, ledit récipient comprenant au moins une surface interne et une surface externe, et
halogéner ledit matériau polymère sur au moins ladite surface interne dudit récipient.

44. Procédé selon la revendication 38, comprenant en outre la fermeture hermétique dudit récipient entre ladite étape de distribution et ladite étape de stockage.

45. Procédé selon la revendication 44, comprenant en outre la stérilisation dudit récipient après ladite étape de fermeture étanche.

46. Procédé selon la revendication 38, dans lequel ledit récipient est un récipient comprenant une matrice de résine polymère comprenant au moins un matériau polymère post-halogéné.

47. Combinaison comprenant :
un récipient comprenant une matrice de résine polymère comprenant au moins un matériau polymère fonctionnalisé, et
une composition de monomère d'éthylène 1,1-disubstitué contenue dans ledit récipient.

48. Combinaison selon la revendication 47, dans laquelle ledit matériau polymère est fonctionnalisé avec au moins un élément choisi dans le groupe comprenant SO₃H, CO₂H, CONR₂, COX, CO₂R, SO₂X, SO₂NH₂, SO₂NR₂, et des mélanges de ceux-ci, où R représente un radical organique substitué ou non substitué et X représente un halogène.

49. Combinaison selon la revendication 47, dans laquelle ledit matériau polymère est fonctionnalisé avec des groupes SO₃H.

50. Combinaison selon la revendication 47, dans laquelle ledit matériau polymère est fonctionnalisé avec des groupes acide carboxylique.

51. Combinaison selon la revendication 47, dans laquelle ledit matériau polymère est fonctionnalisé avec des groupes sulfonamide.

52. Procédé de fabrication de la combinaison de la revendication 47, comprenant les étapes consistant à :
fournir un récipient comprenant un matériau polymère, ledit récipient comprenant au moins une surface interne et une surface externe,
fonctionnaliser ledit matériau polymère sur au moins ladite surface interne dudit récipient,
distribuer une composition de monomère d'éthylène 1,1-disubstitué dans ledit récipient, et
fermer facultativement ledit récipient de façon hermétique.

53. Procédé selon la revendication 52, dans lequel ledit matériau polymère est fonctionnalisé avec au moins un élément choisi parmi SO₃H, CO₂H, CONR₂, COX, CO₂R, SO₂X, SO₂NH₂, SO₂NR₂, et des mélanges de ceux-ci, où R représente un radical organique substitué ou non substitué et X représente un halogène.

54. Procédé selon la revendication 52, dans lequel ledit matériau polymère est fonctionnalisé avec des groupes SO₃H.

55. Procédé selon la revendication 52, dans lequel ledit matériau polymère est fonctionnalisé avec des groupes acide carboxylique.

56. Procédé selon la revendication 52, dans lequel ledit matériau polymère est fonctionnalisé avec des groupes sulfonamide.
